# EUROPEAN PATENT APPLICATION

(11) **EP 1 372 153 A1**
(43) Date of publication of application: **17.12.2003**
(21) Application number: 02713186.1
(22) Date of filing: 22.03.2002
(51) Int. Cl.: G11B 33/00

(54) **REPRODUCTION SYSTEM, ELECTRONIC APPARATUS AND DISC RECORDING AND/OR REPRODUCTION APPARATUS**

(30) Priority: 22.03.2001 JP 2001083321; 28.06.2001 JP 2001197542; 13.07.2001 JP 2001214553; 13.07.2001 JP 2001214554
(71) Applicant: Sony Corporation, Tokyo 141-0001 (JP)
(72) Inventor: YANO, Kazuyoshi, c/o Sony Engineering Corporation, Tokyo 141-0031 (JP); YABUKI, Keiko, c/o Sony Corporation, Tokyo 141-0001 (JP); HASHIMOTO, Takaaki, c/o Sony Corporation, Tokyo 141-0001 (JP); NAKAZAWA, Masahide, c/o Sony Corporation, Tokyo 141-0001 (JP); TAMURA, Masafumi, c/o Sony Corporation, Tokyo 141-0001 (JP); HIRANO, Shinpei, c/o Sony Corporation, Tokyo 141-0001 (JP)
(74) Representative: Nicholls, Michael John
(86) International application number: JP0202792
(87) International publication number: WO02077997

(57) **Abstract**

The present invention relates to: a reproduction system including a reproducing device reproducing information stored in a storage medium, a controller having a remote control unit sending a reproduction instruction control signal to the reproducing device and a display unit receiving the reproduced information to display the information; an electronic device including a battery housing and an opening and closing cover, in which the battery housing is opened and closed integrally with the opening and closing cover; and a disc recording and/or reproducing device provided with the electronic device in which a disc installation unit installing a disk as a storage medium and a pickup device for recording and/or reproducing information signals on a disc installed on the disc installation unit are included.

A reproduction system according to the present invention comprises: a reproducing device reproducing natural picture information stored in a storage medium; and a controller having a remote control unit sending at least a reproduction instruction control signal to the reproducing device and a display unit receiving natural picture information reproduced by the reproducing device according to the reproduction instruction control signal to display the information.

According to the reproduction system, by connecting the reproduction device and the controller, the reproduction instruction control signal is sent from the controller to drive the reproducing device, and natural picture information reproduced by the reproducing device is received by the controller to display the information on the display unit. Accordingly, the reproduction system such as a DVD player is operational in a similar manner to those of a general headphone stereo player and the like, and natural picture information conventionally enjoyed only indoors may be easily enjoyed outdoors.

## Description

### TECHNICAL FIELD

The present invention relates to a reproduction system comprising a reproducing device which reproduces information stored in a storage medium, and a controller having a remote control unit which sends a reproduction instruction control signal to the reproducing device and a display unit which receives and displays the information to be reproduced; an electronic device having a battery housing and an opening and closing cover, in which the battery housing may be opened and closed integrally with the opening and closing cover; and a disc recording and/or reproducing device in which the electronic device is provided with a unit on which a disc is installed as a storage medium, and a pickup device for recording and/or reproducing information signals on the disc installed on the disc installation unit.

### BACKGROUND ART

Conventionally, there have been generally provided an electronic device comprising an information reproducing device which reproduces and outputs information recorded on a disc-type storage medium, a control device which displays information on a screen of a display unit, based on a signal reproduced by the information reproducing device, and the electronic device in which the control device and the information reproducing device are connected by a connecting cable wire to be used.

As a first conventional electronic device, for example, an electronic device comprising a DVD player as an information reproducing device, a television set as a control device provided with a cathode-ray tube as a display unit, and a connection cable for electrically connecting the television set and the DVD player may be listed.

In the above example, the television set has been sufficiently large, and the DVD player has also been comparatively large as an electronic device. Accordingly, these television set and the DVD player have been fixed indoors to be used, and there has been no idea of using the above devices for outdoor amusement.

Moreover, as a second conventional electronic device, for example, a personal computer (hereinafter, called as "PC") may be listed. With regard to the PC, the device has become smaller in size, lighter in weight, and more convenient to carry. Further, more functions have been remarkably provided, and colored display screen on a display unit has been developed. On the other hand, demand for continuous use for a long time has been increasing. Therefore, for a portable PC, larger capacity of a portable power supply device and longer operation time have been required.

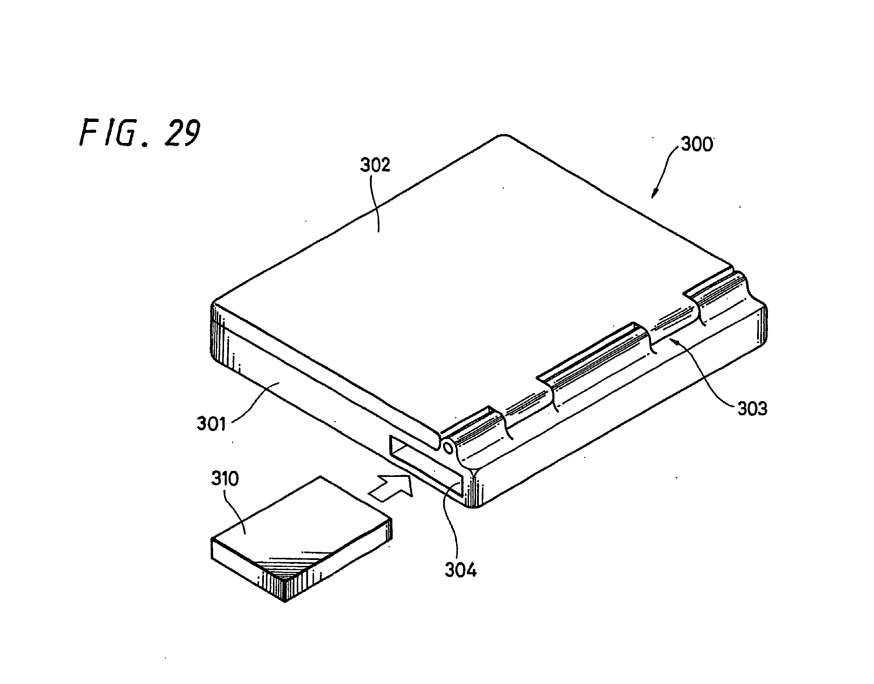

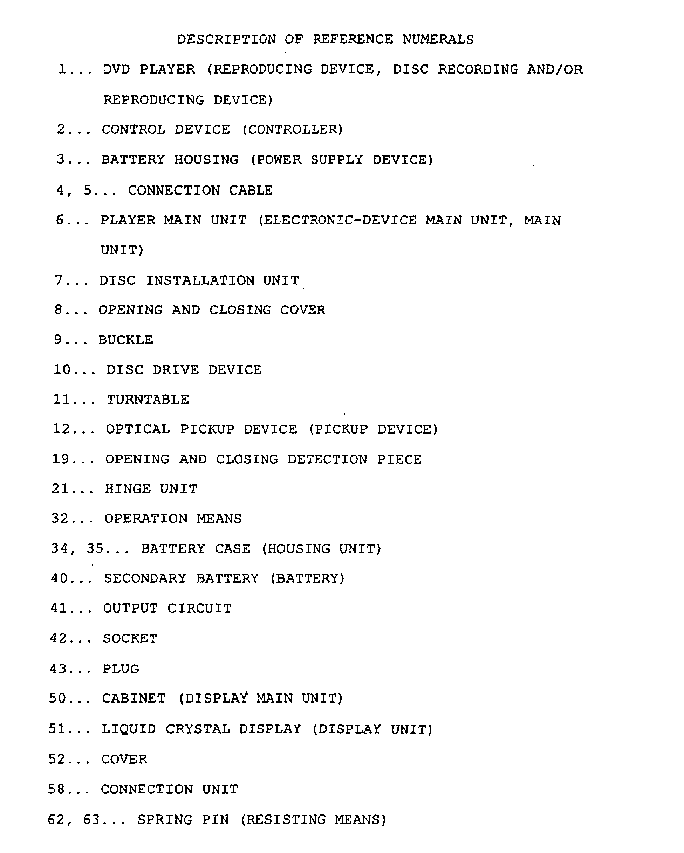

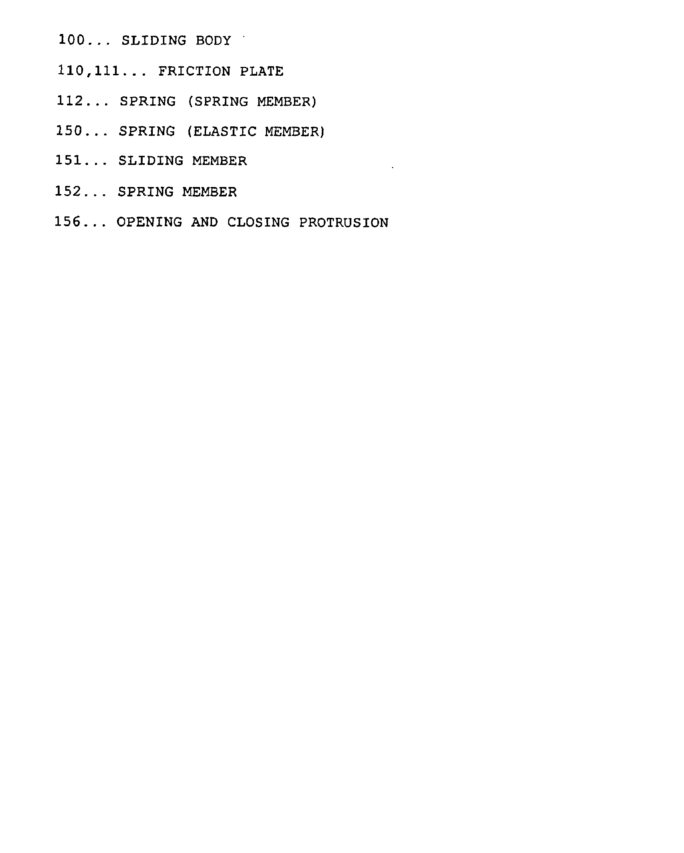

A PC and a portable power supply device shown in FIG. 29, for example, have been known as such devices. In FIG. 29, a reference numeral 301 represents a main unit of a PC 300, and a liquid crystal display 302 which is also used as a cover is pivotally fitted on the main unit 301 with a hinge mechanism 303. In addition, a power supply housing unit 304 in which a detachable portable power supply 310 is installed is provided on the side of the main unit 301.

When the battery 310 which is an example of the portable power supply is installed into the power supply housing unit 304, the PC 300 is driven by electric power of the battery 310. As the driving power of the PC 300 depends on the electric power supplied from the battery 310, a large number of batteries 310 are required to be used, for example, when much electric power is required, or when the PC 300 is used for a long period of time.

Furthermore, as a third conventional electronic device, for example, a CD player may be listed. The CD player is composed of a player main unit having a disc installation unit which an optical disc is put on or taken off, and an opening and closing cover which is provided in the player main unit in a detachable manner to cover the disc installation unit. A disc drive device is provided in the disc installation unit of the player main unit. By covering the disc drive device with the opening and closing cover, dusts or the like is prevented from entering, and, at the same time, an optical disc which rotates at a high speed and the user handling the device are protected.

Accordingly, when the disc drive device is driven, generally the opening and closing cover is being closed by cover closing means in order not to be opened. The cover closing means is provided with a releasing button which releases a closed state of the cover closing means. It is configured that when the release operation is selected by pushing the releasing button, the opening and closing cover is unlocked and opened at a predetermined angle. When the cover is opened at the predetermined angle, detection means to detect the opening and closing states of the opening and closing cover is operated to output a detection signal and stops the operation of the disc drive device based on the detection signal.

At this time, in the disc drive device, output of a driving signal to drive a spindle motor is stopped, and output of a control signal which controls the optical pickup is also stopped. Then, rotation of the turntable which is fixed at a rotation shaft of the spindle motor is stopped, and rotation of the optical disc is stopped. Simultaneously, or almost simultaneously, irradiation of laser beams from the optical pickup device is stopped. Thereafter, a user opens the opening and closing cover wide by hands to fully expose the disc installation unit so that the optical disc is exchanged.

In the above first example of the conventional device, however, a smaller and lighter device has been strongly demanded, and also there has been increasing desire to casually use the device not only indoors, but also outdoors for amusement. For example, if a smaller and lighter DVD player, like a general headphone stereo player, is provided and used by hanging it from the neck or the shoulder of a user, it may be easily used outdoors for amusement, using a combined liquid crystal display which has been already smaller and lighter as a display device.

Moreover, in the above second example of the conventional device, there has been a disadvantage that recent demand for smaller and lighter devices is not satisfied. Since battery capacity depends on the battery size, the whole size of the device may become larger more than necessary when only the number of batteries for use is increased.

Furthermore, in the above-described third example of the conventional device, there is a possibility of the opening and closing cover being opened before the turntable completely stops, as the disc drive device is configured to stop after opening and closing operation of the opening and closing cover is detected by opening and closing detection means.

### DISCLOSURE OF INVENTION

Considering the above circumstances, the object of a first aspect of the present invention is to provide a reproduction system by which video viewing or the like is easily appreciated not only indoors as conventionally appreciated, but also outdoors, by providing a reproducing device and a controller separately and by connecting the above reproducing device and the controller using signal transmission means by wire or that of wireless one.

The object of a second aspect of the present invention is to provide an electronic device which is smaller and lighter with larger electric power by pivotally connecting a pair of housing units which may contain batteries with a hinge mechanism.

Furthermore, the object of a third aspect of the present invention is to provide a disc recording and/or reproducing device with a configuration in which the opening and closing cover is firmly closed using a buckle used for water-proof treatment, and a disc drive device may be driven when the opening and closing cover is actually closed and held by the buckle, whereby disadvantages such as rotation of a turntable and leakage of laser beams in a state where the opening and closing cover is halfway opened may be prevented.

In order to solve the above-described disadvantages and to realize the above objects, a reproduction system according to the present application comprises: a reproducing device which reproduces natural picture information stored in a storage medium; and a controller having a remote control unit which sends at least a reproduction instruction control signal to the reproducing device and a display unit which receives natural picture information reproduced by the reproducing device according to the reproduction instruction control signal and displays the natural picture information.

Further, an electronic device according to the present application comprises: a battery housing in which a pair of housing units at least one of which contains a battery are provided with a hinge mechanism such that the housing units may be freely opened and closed; and an opening and closing cover that opens and closes a storage-medium installation unit in which a storage medium is installed, wherein the battery housing is installed in the opening and closing cover, and is integrally opened and closed with the opening and closing cover.

The disc recording and/or reproducing device according to the present application comprises: a battery housing in which a pair of housing units at least one of which contains a battery are provided with a hinge mechanism such that the housing units may be freely opened and closed; a main unit having a disc installation unit to install a disc; a pickup device by which an information signal is recorded on and/or reproduced from the disc installed in the disc installation unit; and an opening and closing cover which opens and closes the disc installation unit which is provided in the main unit through the hinge mechanism, wherein the battery housing is installed in the opening and closing cover, and is integrally opened and closed with the opening and closing cover.

Furthermore, the disc recording and/or reproducing device according to the present application comprises: a main unit including an opening and closing cover which covers a disc installation unit in which a disc is installed such that the cover can be freely opened and closed; a turntable provided in the disc installation unit, which mounts a disc and rotates with the disc; a rotation driving unit which drives the turntable to rotate, an optical pickup device by which laser beams are irradiated on the disc driven by the rotation driving unit to rotate, and information is reproduced from the reflected beams; a buckle which locks the opening and closing cover with respect to the main unit; a first opening and closing detection means which detects opening and closing states of the opening and closing cover, and outputs a first detection signal; a second opening and closing detection means which detects a state in which the opening and closing cover is locked with the buckle, and outputs a second detection signal; and control means for controlling such operations as allowing the turntable driven by the rotation driving unit to start rotating, and, at the same time, allowing the optical pickup device to irradiate laser beams on the disc when the opening and closing cover is closed and the cover is locked with the buckle, based on the first and second detection signals.

According to the above-described configuration, in the reproduction system of the present application, by connecting the reproduction device and the controller, the reproduction instruction control signal is sent from the controller to drive the reproducing device, and natural picture information which is reproduced by the reproducing device may be received in the controller to display the information on the display unit. Accordingly, the reproduction system such as a DVD player may be made to operate in a similar manner to those of a general headphone stereo player and the like, and natural picture information which has been conventionally enjoyed only indoors may be easily enjoyed outdoors.

Moreover, according to the electronic device of the present application, since the battery housing is integrally opened and closed with the opening and closing cover by opening and closing the cover, opening and closing operations of the opening and closing cover may be simply executed without installing or detaching the battery housing, and the whole size and the whole weight of the device may be become smaller and lighter, respectively, while more batteries are contained.

According to the disc recording and/or reproducing device of the present application, since the battery housing is integrally opened and closed with the opening and closing cover by opening and closing the cover, opening and closing operations of the disc installation unit into which a disc is installed may be easily executed, whereby there is no need to install or detach the battery housing when the opening and closing cover is opened and closed. At the same time, the whole size and the whole weight of the device may be become smaller and lighter, while more batteries are contained.

Furthermore, according to the disc recording and/or reproducing device of the present application, since the turntable is driven to start the rotation and then the optical pickup device irradiates laser beams on a disc, only when the opening and closing cover is closed and the cover is locked with the buckle, based on the first detection signal of the first opening and closing detection means and the second detection signal of the second opening and closing detection means, there is no need to concern about the opening and closing cover being opened when recording and/or reproducing of information signals is performed, whereby it is possible to provide a device with higher safety and without the possibility that laser beams are applied to users.

### BRIEF DESCRIPTION OF DRAWINGS

FIG. 1 is a perspective view showing a system configuration of a reproduction system according to the present invention;
FIG. 2 is an outside perspective view of a DVD player showing one embodiment of disc recording and/or reproducing device according to the reproduction system of the present invention;
FIG. 3 is a plan view of the DVD player shown in FIG. 2;
FIG. 4 is a bottom view of a battery housing, which is cut into halves, of the DVD player shown in FIG. 2;
FIG. 5 is a plan view of a player main unit of the DVD player shown in FIG. 2;
FIG. 6 is a front view of the battery housing, which is cut into halves, of the DVD player shown in FIG. 2;
FIG. 7 is a rear view of the player main unit of the DVD player shown in FIG. 2;
FIG. 8 is a side view of the DVD player shown in FIG. 2;
FIG. 9 is a side view of the player main unit of the DVD player shown in FIG. 2;
FIG. 10 is a perspective view showing the state in which an opening and closing cover of the player main unit of the DVD player shown in FIG. 2 is open;
FIG. 11 is a perspective view of the opening and closing cover, which is seen from the lower side, of the DVD player shown in FIG. 2;
FIG. 12 is an explanatory view of an enlarged arm piece of the opening and closing cover shown in FIG. 11;
FIG. 13 is an explanatory sectional view of the main parts of a first friction mechanism provided between the opening and closing cover and the player main unit of the DVD player shown in FIG. 2;
FIG. 14 is a perspective view of the battery housing, which is opened, of the DVD player shown in FIG. 2;
FIG. 15 is an explanatory sectional view of the main parts of a second friction mechanism provided in the battery housing of the DVD player shown in FIG. 2;
FIG. 16 is a perspective view showing main parts of an enlarged buckle which is seen from the right side of the player main unit shown in FIG. 10;
FIG. 17 is a front view of the main parts of the enlarged buckle which is seen from the upper side of the player main unit shown in FIG. 10;
FIG. 18 is an explanatory cutaway view of a part of a holding stand in a state of electric power being charged into the DVD player shown in FIG. 2;
FIG. 19A is a front view of a control device of the DVD player according to a first embodiment of the present invention;
FIG. 19B is a side view of the control device of the DVD player according to the first embodiment of the present invention;
FIG. 19C is an enlarged perspective view of a spring pin of the control device of the DVD player according to the first embodiment of the present invention;
FIG. 20 is a plan view of the control device of the DVD player of FIG. 19, wherein a cover is opened;
FIG. 21 is an explanatory view of the control device of the DVD player of FIG. 20, wherein the cabinet is cut at the center to show a main part;
FIG. 22A is a side view of explaining the control device of the DVD player according to the first embodiment of the present invention put under use, wherein the cover is opened at an angle of slightly smaller than 90 degrees;
FIG. 22B is a side view of explaining the control device of the DVD player according to the first embodiment of the present invention put under use, wherein the cover is opened at an angle of approximately 90 degrees;
FIG. 23A is a side view of explaining the control device of the DVD player according to the first embodiment of the present invention put under use, wherein the cover is opened as a stand at an angle of approximately 270 degrees;
FIG. 23B is a side view of explaining the control device of DVD player according to the first embodiment of the present invention put under use, wherein the cover is opened at an angle of 360 degrees;
FIG. 24A is a side view of a control device of the DVD player according to a second embodiment of the present invention, wherein a cover is closed;
FIG. 24B is a side view of the control device of the DVD player according to the second embodiment of the present invention, wherein the cover is opened at an angle of approximately 90 degrees;
FIG. 24C is a side view of the control device of the DVD player according to the second embodiment of the present invention, wherein the cover is opened at an angle of approximately 270 degrees;
FIG. 25 is a side view of a control device of the DVD player according to a third embodiment of the present invention, wherein a cover is closed;
FIG. 26A is a side view of a control device of the DVD player according to a fourth embodiment of the present invention, wherein a cover is closed;
FIG. 26B is an explanatory view of a clicking circular plate in the control device of the DVD player according to the fourth embodiment of the present invention, wherein the plate is enlarged and exploded;
FIG. 27A is a side view of a control device of the DVD player according to a fifth embodiment of the present invention, wherein a cover is closed;
FIG. 27B is a side view of the control device of the DVD player according to the fifth embodiment of the present invention, wherein the cover is opened at an angle of approximately 180 degrees;
FIG. 27C is a side view of the control device of the DVD player according to the fifth embodiment of the present invention, wherein the cover is opened at an angle of 360 degrees;
FIG. 28A is a front view of a control device of the DVD player according to a sixth embodiment of the present invention, wherein a cover is closed;
FIG. 28B is a side view of the control device of the DVD player according to the sixth embodiment of the present invention, wherein the cover is closed;
FIG. 29 is an explanatory view of an example of a conventional electronic device.

### BEST MODE FOR CARRYING OUT THE INVENTION

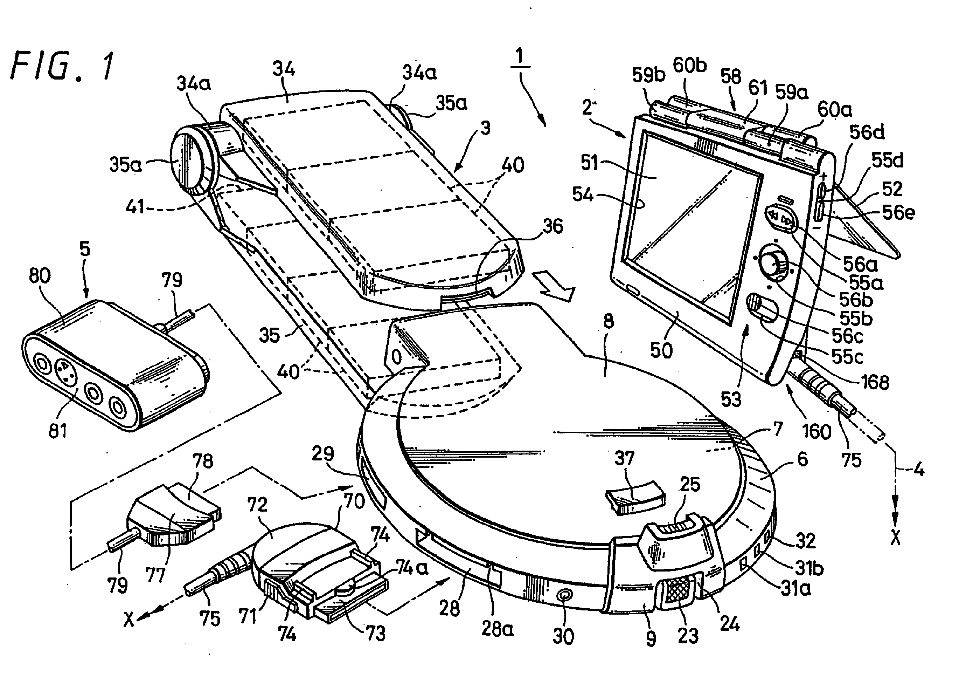

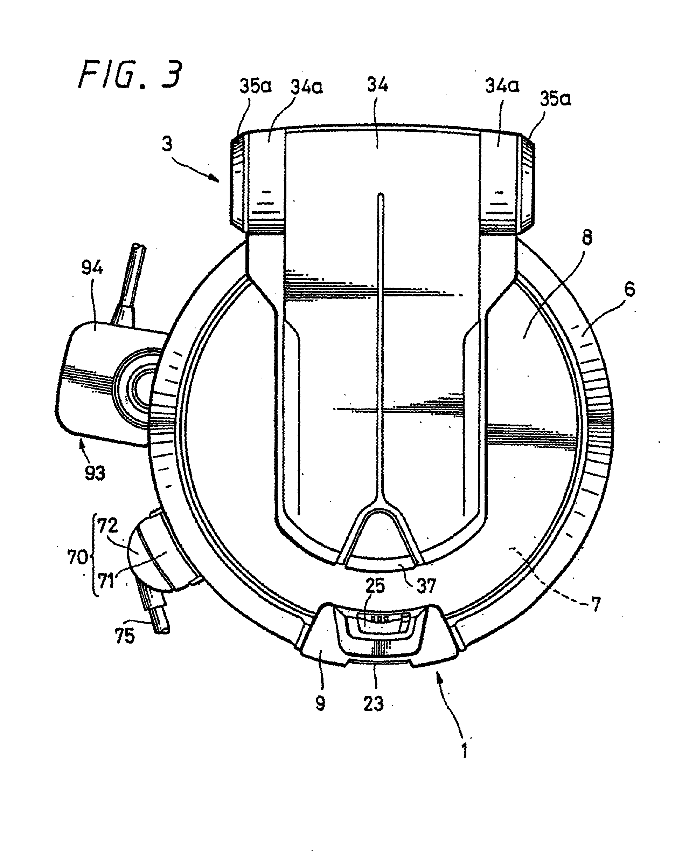

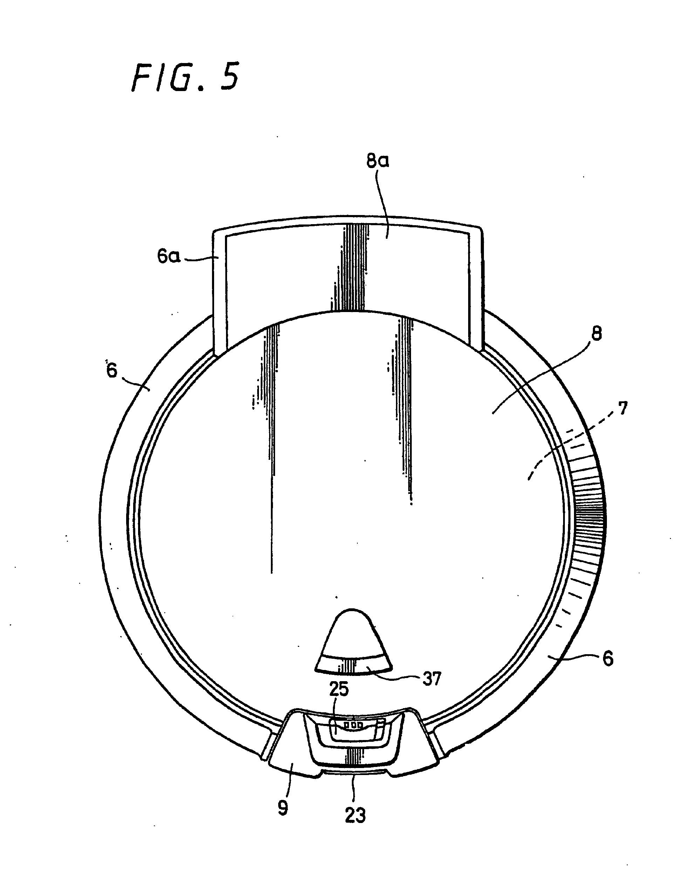

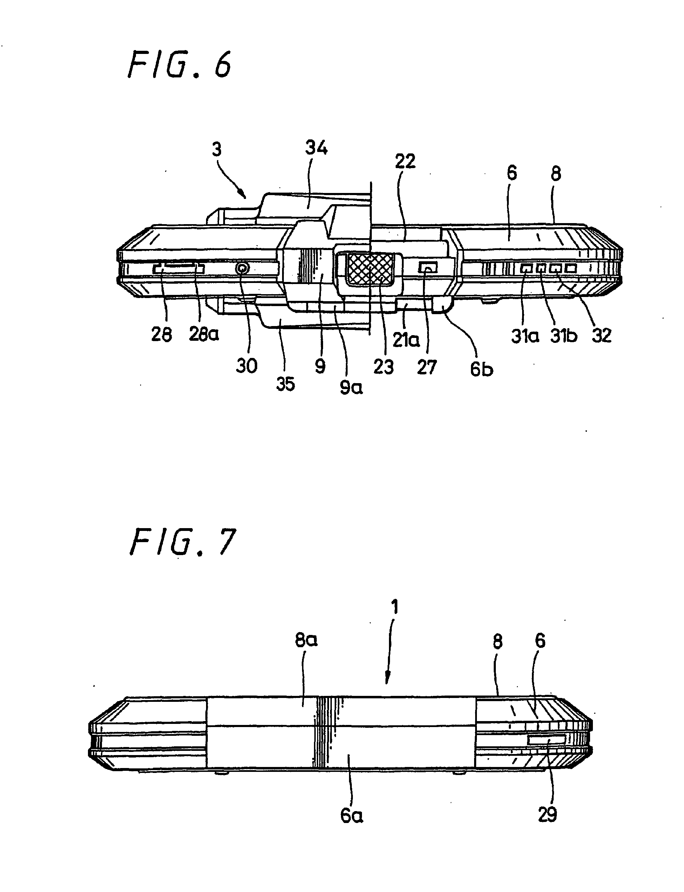

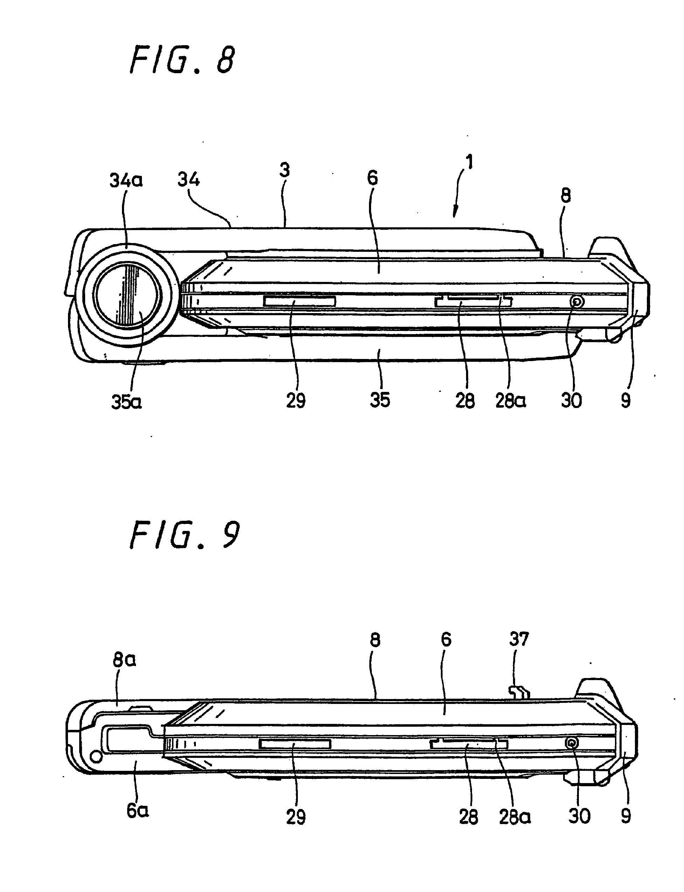

Hereinafter, embodiments of the present invention will be described, referring to attached drawings. FIG. 1 to FIG. 28 show embodiments of a disc recording and/or reproducing device in a reproduction system according to the present invention, and the device is configured to be a portable DVD player.

As shown in FIG. 1, the DVD player 1 comprises: a player main unit 6 for DVD (Digital Versatile Disc) which represents an example of a storage medium; a control device 2 which is a controller to perform remote control operations on the player main unit 6; and a battery housing 3 which is a power supply device supplying electric power to the control device 2 and the player main unit 6.

The player main unit 6 and the control device 2 are connected through a first connection cable 4 which is signal transmission means. Moreover, the player main unit 6 and the other electronic devices (for example, a television set or the like), or a socket as a domestic power supply and the like are connected through a second connection cable 5 which is also signal transmission means.

As shown in FIG. 1 to FIG. 13, the player main unit 6 has a shell-shaped body in which a terrace-like protruding portion 6a is provided at a part of a disc shape body in the circumferential direction. A disc installation unit (storage medium installation unit) 7 which is comprised of a circular recess for installing a disc as a storage medium is provided on the upper surface of the player main unit 6. The disc installation unit 7 is opened and closed with an opening and closing cover 8 in a similar shell shape. Further, a buckle 9 which locks the opening and closing cover 8 in a closed state is provided in the player main unit 6.

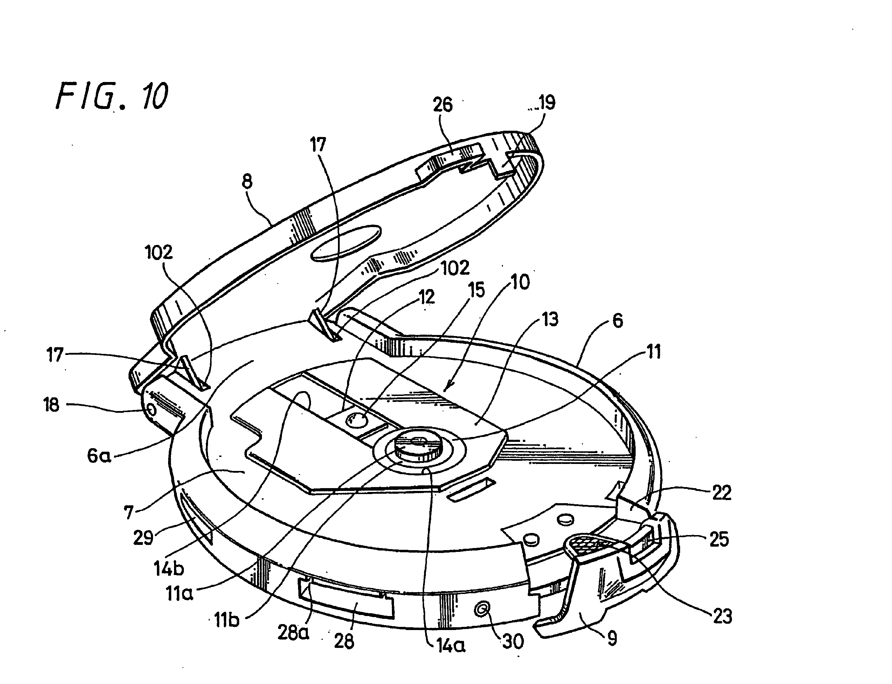

As shown in FIG. 10, a disc drive device 10 which is elastically supported by the player main unit 6 is disposed in the disc installation unit 7 of the player main unit 6. The disc drive device 10 represents a specific example of driving means which drives the player main unit 6 representing a reproducing device. The disc drive device 10 comprises a turntable 11 arranged in the center of the disc installation unit 7 and an optical pickup device 12 disposed on the turntable 11, which executes one or both of the reproduction (read) and recording (write) of an information signal with respect to a information storage surface of an optical disc (hereinafter, called as "disc"), such as DVD and CD (compact disc) which represent specific examples of a disc-type storage medium.

Though not shown in the drawings, the turntable 11 is fitted on a rotation unit of a spindle motor which is fixed to a chassis at the fixed unit. A rotation driving unit which drives a disc to rotate is comprised of the spindle motor and the turntable 11.

Further, the optical pickup device 12 shows one specific example of a pickup device by which information stored on a surface of a disc is read and reproduced. The optical pickup device 12 is slidably supported by a pair of guide shafts fixed to the chassis. The pair of guide shafts are arranged parallel to each other at a predetermined distance, with their front ends being arranged such that the spindle motor is held thereby, and their rear ends being extended backward.

The upper surface of the disc drive device 10 is covered with a cover plate 13. A circular center hole 14a and an opening portion 14b in a long-hole shape which extends backward continuously from the circular center hole 14a are provided in the cover plate 13. Then, the turntable 11 is protruded upward from the center hole 14a, and an optical head of the optical pickup device 12 is inserted into the opening portion 14b. An objective lens 15 of the optical head is provided to face the information storage surface of the disc installed on the turntable 11.

A data area which stores at least natural picture information, and a management area which stores management data for managing data in the data area are provided on the disc. Here, natural picture information is defined as pictures obtained by picking up images of a part of the real world. For example, pictures obtained by picking up such images as scenery of nature, buildings, people, animals, plants or the like may be listed as the natural picture information.

Here, as a method to store information on a storage medium, other than that by an optical system in which information is stored using laser beams as in the present embodiments, a magnetic storage method using magnetism, magneto-optic storage method in which information is stored using both of the light and magnetism, and other storage methods may be applied.

The turntable 11 of the disc drive device 10 has an engagement portion 11a engaged with the center hole of the disc, and a mounting portion 11b integrally formed with the engagement portion 11a and on which a periphery of the center hole of the disc is mounted. A plurality of engagement pawls are circumferentially provided approximately at equal distances on the engagement portion 11a of the turntable 11. Each engagement pawl is constituted to be movable in the radial direction of the mounting portion 11b, and generally to be forced outward in the radial direction by springs.

The engagement portion 11a may be engaged with the center hole of the disc by moving the engagement pawls backward against the force of the springs. In such an engagement state, each engagement pawl is engaged with and fixed to the periphery of the central hole by the force of the springs. Then, the disc is chucked and driven to integrally rotate with the turntable 11.

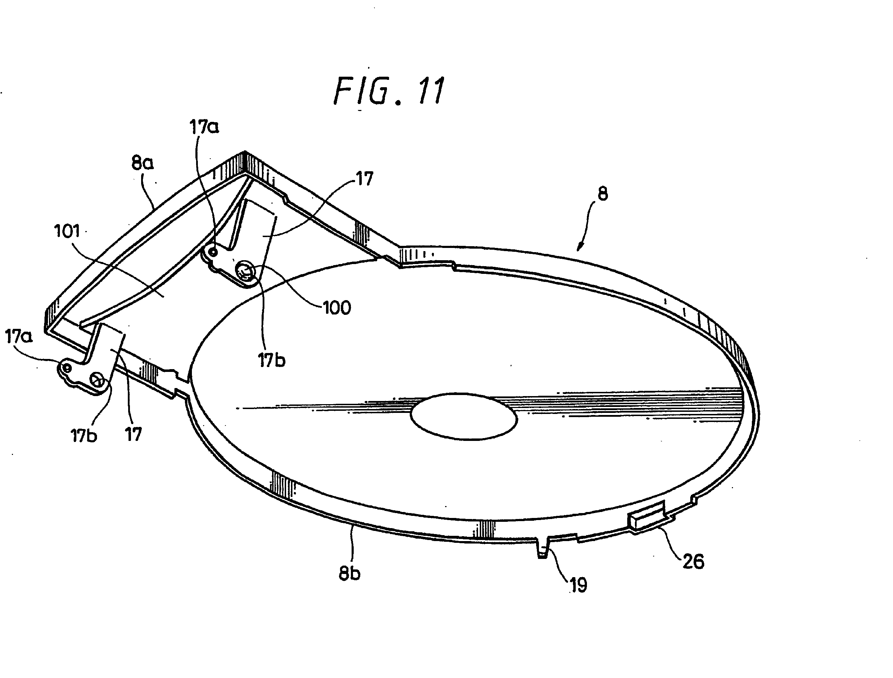

As shown in FIG. 11, the opening and closing cover 8 overlapped on the upper surface of the player main unit 6 is comprised of a protruding portion 8a corresponding to the protruding portion 6a of the player main unit 6 and a side surface portion 8b extending downward from the outer periphery of the protruding portion 8a, that is, toward the lower surface side. In addition, a pair of L-shaped arm pieces 17 and 17, which are protruding toward the lower surface side, are provided in the protruding portion 8a of the opening and closing cover 8. shaft receiving holes 17a which provide a pivoting center to the player main unit 6 are provided in the tip ends of each arm piece 17.

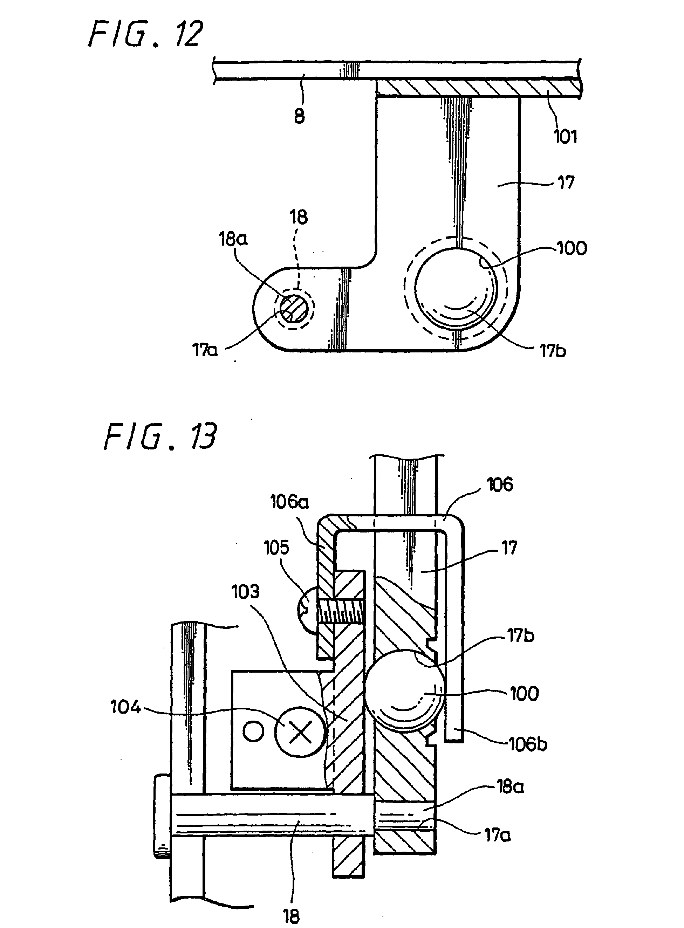

Further, through holes 17b are provided in each bent portion of arm pieces 17. As shown in FIGS. 12 and 13, a steel spherical body 100 is engaged and fixed into one of the through holes 17b of the arms 17 by fixing means such as caulking and press fitting, which shows one specific example of a sliding body. The diameter of the spherical body 100 is selected to be a little bit larger than the thickness of the arm pieces 17, and to protrude sideways from the both surfaces of the arm piece 17.

The pair of the arm pieces 17 and 17 are formed integrally as connected to each other by a cross-linking plate 101, and, also, to be fixed on the lower surface of the protruding portion 8a. This pair of the arm pieces 17 and 17 are inserted into the inside of the player main unit 6, passing through slit openings 102 and 102 which are provided in the protruding portion 6a of the player main unit 6. Moreover, smaller-diameter shaft portions 18a provided on the ends of a supporting shaft 18 are each engaged and fixed integrally to shaft receiving hole 17a of the arm pieces 17 by the fixing means such as press fitting, respectively. Each supporting shaft 18 is supported by shaft receiving bracket 103. And, the shaft-receiving bracket 103 is fixed to the player main unit 6 by the fixing means such as fixing screws 104.

A pair of the supporting shafts 18 and 18 are inserted into the inside of the player main unit 6 from the sides as opposing to each other. The smaller-diameter shaft portions 18a in the tips of each supporting shaft 18 engage each shaft receiving hole 17a of the arm pieces 17, respectively. The opening and closing cover 8 is pivoted in an up-and-down manner with the pair of the supporting shafts 18 and 18 being a pivot center to open and close the disc installation unit 7.

A leaf spring 106 is fixed with a fixing screw 105 on the shaft-receiving bracket 103. The leaf spring 106 has a U-shape, and the fixing screw 105 passes through a fixed piece 106a which is one part of the U-shape leaf spring. A spring piece 106b of the other part of the U-shape leaf spring 106 is protruding to the other side such that the spherical body 100 is held, and the spring piece 106b is forced to elastically press the outer spherical surface of the spherical body 100. The spherical body 100, the shaft receiving bracket 103, and the leaf spring 106 form a first friction mechanism.

The first friction mechanism is provided to give constant magnitude of friction force between the player main unit 6 and the opening and closing cover 8 such that the opening and closing cover 8 may be opened and closed with a constant strength (frictional force). Specifically, frictional force with a suitable magnitude is generated by the spring force of the leaf spring 106 between the spherical body 100 and the shaft receiving brackets 103, and between the spherical body 100 and the spring piece 106b of the leaf spring 106, and the frictional forces enable the opening and closing cover 8 to move with force larger than a predetermined magnitude of force.

With the first friction mechanism provided, the opening and closing cover 8 may be pivoted around a pivoting center at the supporting shafts 18 with a constant magnitude of force regardless of an elevation angle, and the opening and closing cover 8 may also be stopped at an arbitrary opening and closing angle. The disc installation unit 7 is completely closed with the opening and closing cover 8 being pushed down to cover the player main unit 6.

At this time, a cover opening and closing switch which is the first opening and closing detection means (a first detector) is operated by an opening and closing detection piece 19 provided in the opening and closing cover 8, and a first detection signal which detects a state in which the opening and closing cover 8 is closed is output. The opening and closing detection piece 19 is arranged at the side of the free end of the side surface portion 8b of the opening and closing cover 8 (at the opposite side to the arm pieces 17). Corresponding to the opening and closing detection piece 19, a detection hole 20 for the opening and closing cover 8 is provided on the disc installation unit 7 of the player main unit 6. The cover opening and closing switch is arranged at the inside of the detection hole 20.

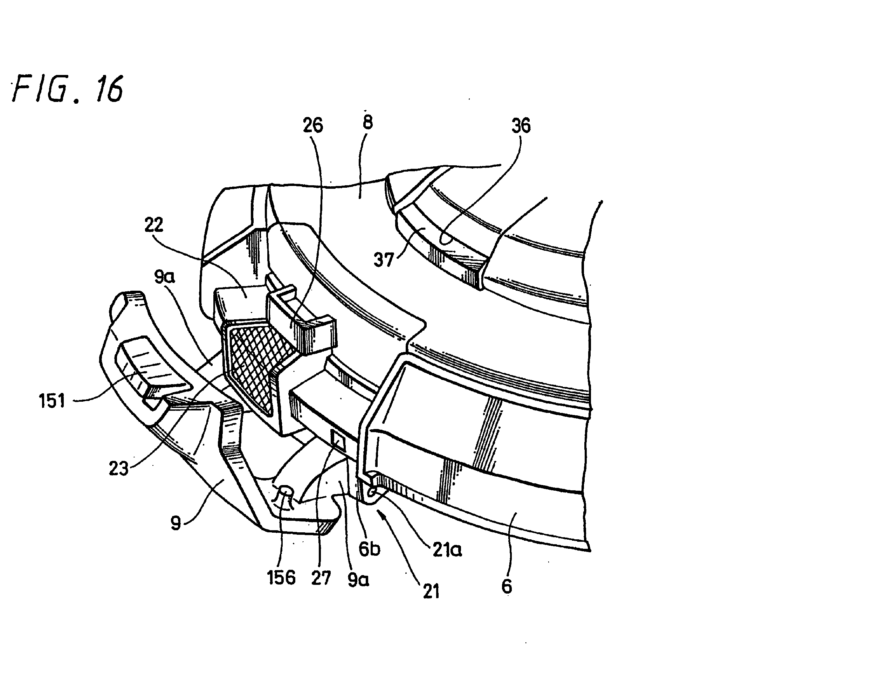

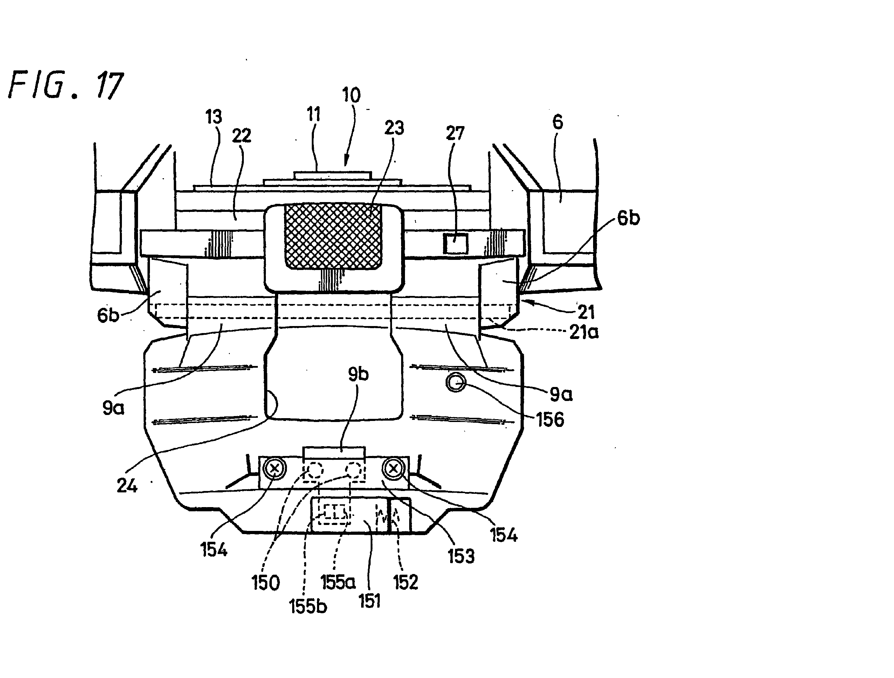

Furthermore, the buckle 9 is pivotally installed on a front surface which is the opposite side to the protruding portion 6a of the player main unit 6. As shown in FIG. 16 and FIG. 17, the buckle 9 has a shape fit for the shape of the side surface of the player main unit 6 such that the buckle 9 is fixed on the side surface thereof, and is joined to the player main unit 6 with a hinge at one side in the width direction perpendicular to the circumferential direction.

That is, shaft receiving portions 9a are provided at one side of the buckle 9 in the width direction, and are inserted between a pair of shaft receiving convex portions 6b and 6b of the player main unit 6. A hinge unit 21 is formed by passing a pivoting shaft 21a through the pair of shaft receiving convex portions 6b and 6b, and the shaft receiving portions 9a. A notch 22, in which the buckle 9 is movably fixed at the side of the free end, is provided on the upper surface of the player main unit 6, which is at the opposite side to the hinge unit 21.

An opening window 24 is provided approximately in the center part of the buckle 9. A beam receiving unit 23 of the remote control device, which will be described later, provided approximately in the center part of the notch 22 of the player main unit 6 is inserted into the opening window 24. The beam receiving unit 23 is constructed to have beam receiving surfaces on two surfaces, that is, the front and upper surfaces of the player main unit 6, and the beam receiving surface at the front side is exposed through the opening window 24.

Furthermore, an engagement body 9b engaging and holding the opening and closing cover 8 is provided in the buckle 9 such that the engagement body 9b can move forward or backward by a forward/backward operation mechanism. The forward/backward operation mechanism comprises: a spring 150 which forces the engagement body 9b to be pressed constantly outward; a sliding member 151 which makes the engagement body 9b move forward or backward against the spring force of the spring 150; a spring member 152 which forces the sliding member 151 to move in the returning direction; a holder 153 which holds the above members; a plurality of fixing screws 154 which fixes the holder 153 to the inside of the buckle 9, and the like. Cam portions 155a and 155b protruding in the directions opposite to each other are provided in the engagement body 9b and the sliding member 151, respectively.

An engagement receiving unit 26 with which the engagement body 9b engages in a detachable manner is provided approximately in the center part at the side of the free end of the opening and closing cover 8, corresponding to the engagement body 9b of the buckle 9. The engagement receiving unit 26 of the opening and closing cover 8 is inserted approximately into the center part of the notch 22 in a state in which the disc installation unit 7 is closed. The tip of the engagement receiving unit 26 and that of the engagement body 9b of the buckle 9 come in contact with each other in a state of the opening and closing cover 8 being overlapped on the player main unit 6. Then, the engagement body 9b is made to move backward against the spring force of the spring 150 by further pushing the buckle 9, and to climb over the tip portion of the engagement receiving unit 26. Subsequently, the opening and closing cover 8 is fastened and locked firmly with the buckle 9 by engaging the engagement body 9b with the engagement receiving unit 26.

Thus, by sliding the sliding member 151 in the rightward direction in FIG. 17 against the spring force of the spring member 152, the cam portion 155b provided in the sliding member 151 makes the cam portion 155a provided in the engagement body 9b move backward. As a result, the engagement body 9b moves backward from the surface of the holder 153 to the inside thereof, and the engagement of the engagement body 9b with the engagement receiving unit 26 of the opening and closing cover 8 is released.

Then, as releasing the sliding member 151, the sliding member 151 slides leftward by the spring force of the spring member 152. With this, the cam portion 155b is separated from the cam portion 155a, thereby the engagement body 9b returning to the original state and protruding by the spring force of the spring 150.

The state in which the opening and closing cover 8 is locked with the buckle 9 can be easily released by the following two aspects of the invention. A first unlocking operation is to slide the sliding member 151 in the circumferential direction. At this time, by sliding the sliding member 151 in the transverse direction, the engagement body 9b moves backward against the spring force of the spring 150. Then, the engagement of the engagement receiving unit 26 with the engagement body 9b is released.

As a result, the buckle 9 can be pulled up, and the engagement body 9b is largely pulled apart from the engagement receiving unit 26 by the pulling-up operation to make the pulling-up operation of the opening and closing cover 8 possible. In such a case, the pulling-up operation of the buckle 9 may be easily and smoothly performed with a small force.

Moreover, a second operation for unlocking a locked state of the opening and closing cover 8 is to directly pull up the buckle 9, omitting the operation of sliding the sliding member 151. In such a case, when the buckle 9 is pulled up, larger pulling-up force than that in the first unlocking operation is required as the spring force of the spring 150, that of the spring member 152 and the movement of the sliding member 151 become a resisting force. However, the pulling-up operation of the buckle 9 may be executed in a comparatively simple manner by adequately setting the magnitude of the spring forces of the spring 150 and the spring member 152.

In order to detect the opening and closing operation of the buckle 9, an opening and closing protrusion 156 is provided at the inside of the buckle 9. A buckle detection hole 27 corresponding to the opening and closing protrusion 156 is provided on the front surface of the notch 22 of the player main unit 6. A buckle opening and closing switch which is opening and closing detection means (a second detector) to detect the opening and closing operation of the buckle 9 is arranged at the inside of the buckle detection hole 27. At this time, with completely installing the buckle 9 and locking the opening and closing cover 8, the opening and closing protrusion 156 is inserted into the buckle detection hole 27. Accordingly, the buckle opening and closing switch is operated by the opening and closing protrusion 156, and a second detection signal which detects the locked state of the buckle 9 is output.

As shown in FIG. 1 and in other figures, on the side surface of the player main unit 6, there are provided a first socket 28, a second socket 29 and an earphone jack 30; display lamps such as a charge lamp 31a and a power supply lamp 31b; and operation means 32 such as a reproducing button and a volume switch. The first and second sockets 28 and 29, and the earphone jack 30 are disposed on the left side-surface of the player main unit 6, and the display lamps and the operation means 32 are disposed on the right side-surface of the player main unit 6.

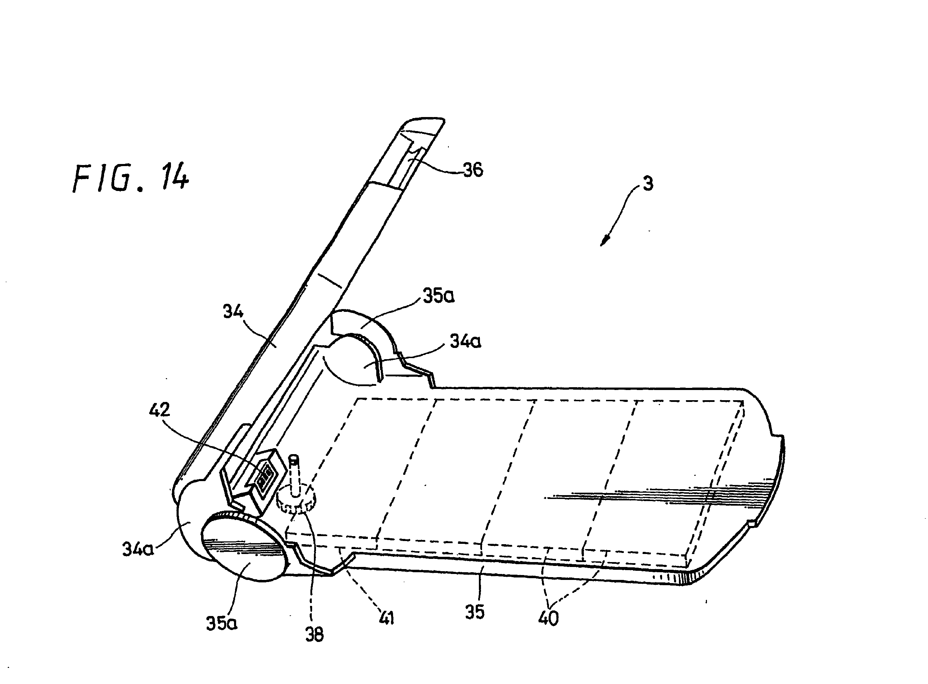

The battery housing 3 for the player main unit 6 having such configuration is installed in a detachable manner as a power supply device. As shown in FIGS. 1, 14 and in other figures, the battery housing 3 comprises a pair of housing units: a first battery case 34 and a second battery case 35, and the both cases 34 and 35 are pivotally connected to each other.

The battery cases 34 and 35 are comprised of flat holders each in rectangle shape, with the plane shapes being approximately similar, and the lower battery case 35 as the second battery case is longer in the longitudinal direction than the upper battery case 34 as the first battery case. Further, the widths of the both battery cases 34 and 35 are slightly wider than those of the protruding portion 6a of the player main unit 6 and the protruding portion 8a of the opening and closing cover 8.

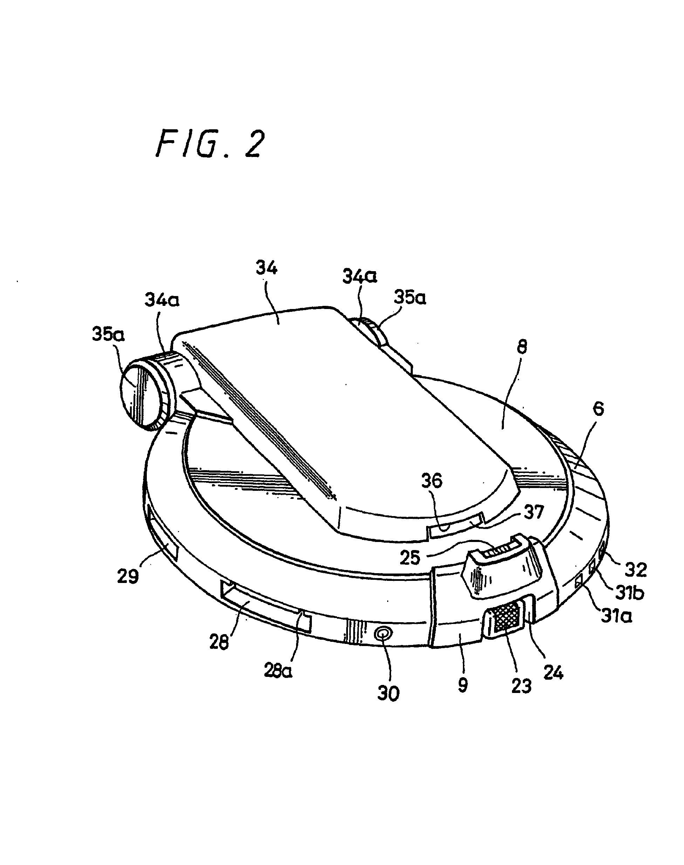

As shown in FIG. 2 and in other figures, connection portions 34a and 35a which are outwardly protruding at the both sides in the widthwise direction are provided at the one end of each battery case 34 and 35 in the longitudinal direction. The upper and lower battery cases 34 and 35 are integrally formed by pivotally connecting each of the connection portions 34a and 35a, respectively. The second friction mechanism is provided in the battery housing 3.

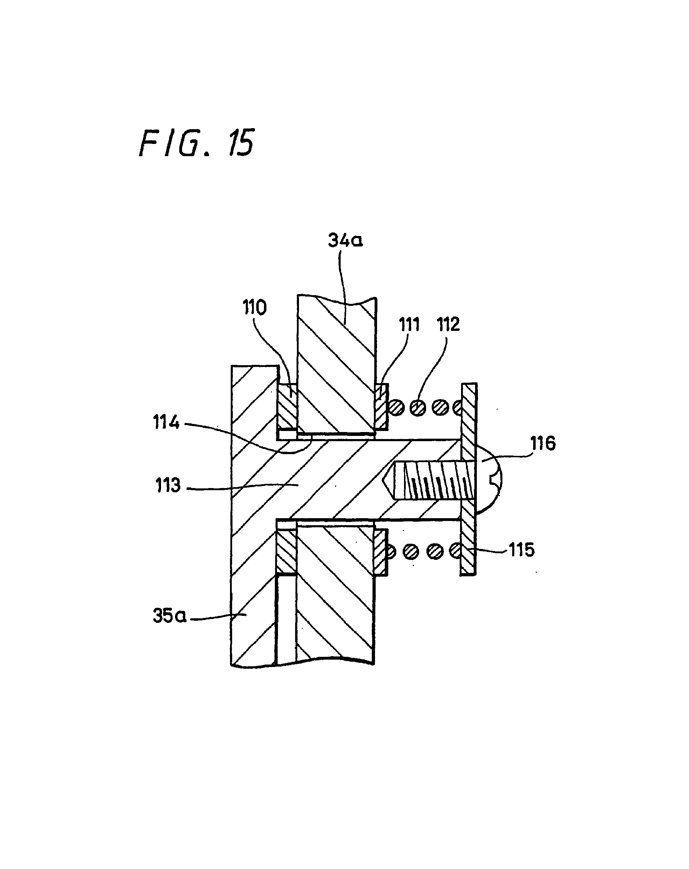

As shown in FIG. 15, the second friction mechanism comprises: a friction ring 110 in a ring shape indicating one specific example of a friction plate set between the connection portions 34a and 35a of the upper and lower battery cases 34 and 35; a metal washer 111 which is also a friction plate and is made in contact with the upper connection portion 34a of the upper battery case 34; a spring 112 which presses the metal washer 111 to the upper connection portion 34a of the upper battery case 34 as well as the lower connection portion 35a of the lower battery case 35 to the friction ring 110; and others.

A shaft 113 provided in the lower connection portion 35a is pivotally inserted through the friction ring 110, the metal washer 111 and a through hole 114 of the upper connection unit 34a. A screw hole is provided on the surface of the tip of the shaft 113, and a washer 115 is fixed to the tip of the shaft 113 with a fixing screw 116 screwed into the screw hole. One end of the spring 112 is seated on the washer 115, and the other end of the sprig 112 is seated on the metal washer 111 in a compressed state.

According to the second friction mechanism with such a configuration, by the spring force of the spring 112, one surface of the upper connection unit 34a is pressed into contact with one surface of the friction ring 110, and the lower connection unit 35a is pressed into contact with the other surface of the friction ring 110, and also the metal washer 111 is pressed into contact with the other surface of the upper connection unit 34a. As a result, the frictional force is generated between the upper connection unit 34a and the friction ring 110; and between the upper connection unit 34a and the metal washer 111, and also the frictional force is generated between the lower connection unit 35a and the friction ring 110.

With the above frictional forces, friction is generated on the opening and closing cover 8 being pivotal with respect to the player main unit 6. By suitably setting the magnitude of the friction, the magnitude of the force for opening and closing the battery housing 3 may be preferably set, and the upper battery case 34 housing heavy batteries may be halted at an arbitrary opening and closing angle. Moreover, that state may be kept.

Thus, the battery housing 3 may be placed in whether a closed state in which the upper and lower battery cases 34 and 35 are opened at a predetermined distance approximately being parallel to each other in the vertical direction, or an open state in which the inclined upper battery case 34 is opened at an arbitrary angle (for example, 30 degrees, 45 degrees, 60 degrees, and the like) with respect to the lower battery case 35. The distance between the battery cases 34 and 35 in the closed state, in which the upper and lower battery cases 34 and 35 are approximately parallel to each other, represents the thickness of the player main unit 6, and the player main unit 6 is inserted between the upper and lower battery cases 34 and 35.

In order to position the player main unit 6 inserted as described above, an engagement concavo-convex portion 36 is provided at the end of the upper battery case 34. A hook 37 with an L-shape cross section is provided in the opening and closing cover 8, corresponding to the engagement concavo-convex portion 36. The hook 37 is arranged in the neighborhood of the engagement receiving unit 26 on the opening and closing cover 8. By engaging the engagement concavo-convex portion 36 with the hook 37, positioning of the upper battery case 34 with respect to the opening and closing cover 8 and joining of the opening and closing cover 8 to the upper battery case 34 may be simultaneously executed.

Further, a fixing screw 38 is pivotally provided in the lower battery case 35. The fixing screw 38 is arranged at a position corresponding to the protruding portion 6a of the player main unit 6 in the lower battery case 35. A screw hole is provided on the rear surface of the player main unit 6, corresponding to the fixing screw 38, and the lower battery case 35 is fixed to the player main unit 6 by screwing the fixing screw 38 into the screw hole.

The upper battery case 34 is pivoted integrally with the opening and closing cover 8 in a state in which the lower battery case 35 is fixed. That is, the opening and closing cover 8 may freely cover or expose the disc installation unit 7 while the upper battery case 34 is fixed thereto. A suitable number of rechargeable secondary batteries 40 are stored in the upper battery case 34.

In the lower battery case 35, a suitable number of rechargeable secondary batteries 40 and an output circuit 41 are also stored. The output circuit 41 detects abnormalities in the current and voltage of the electric power supplied from the secondary batteries 40, and supplies predetermined electric power to the player main unit 6 and the like. Specifically, the output circuit 41 also serves as a safety circuit which detects abnormalities with respect to the electric power such as larger flow of current from the battery housing 3 than that of a rated one, smaller voltage than a set value, and the like.

In such case, when the output circuit 41 detects large current or abnormalities in the voltage, it is decided that there are abnormalities in any of the secondary batteries stored in the upper and lower battery cases 34 and 35, and alarm signals are output to take necessary countermeasures such as display of warning, disconnection of the currents or the like. Here, it is preferable that each secondary battery 40 is provided with a thermal fuse so that temperature control and the like are executed for each secondary battery 40.

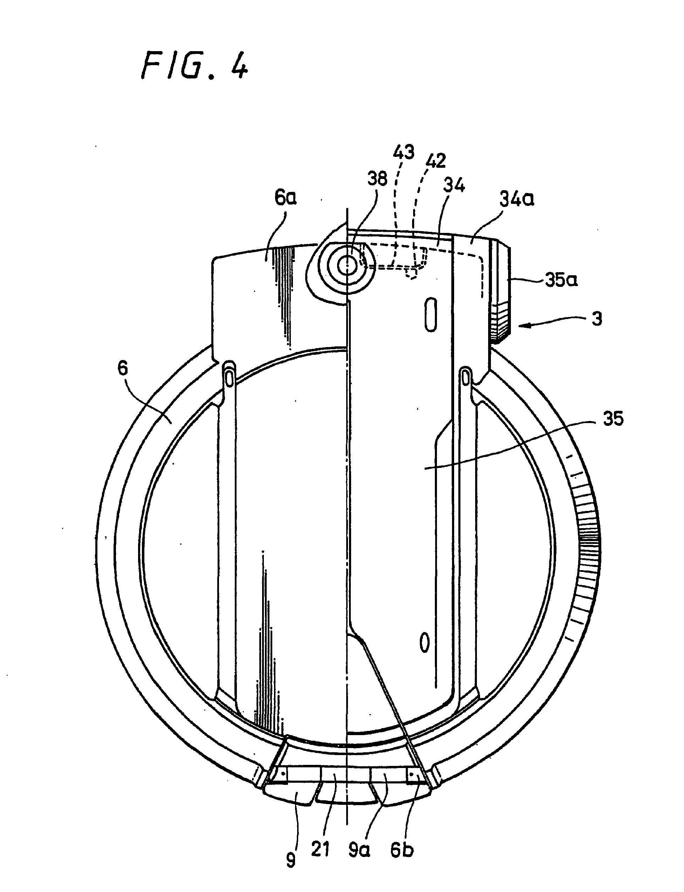

The output circuit 41 is connected to a connector 42 shown in FIG. 4 and FIG. 14. The socket 42 is integrally provided on the rear surface of the lower battery case 35. A plug 43 provided in a detachable manner on the rear surface of the player main unit 6 is connected to the socket 42. Accordingly, the socket 42 is automatically connected to the plug 43 of the player main unit 6 by installing the battery housing 3 in the player main unit 6, whereby electric power is automatically supplied from the battery housing 3 to the player main unit 6.

As materials for the above configured player main unit 6, opening and closing cover 8, buckle 9, and the upper and lower battery cases 34 and 35, engineering plastic, for example, ABS (acrylonitrile butadiene styrene resin), POM (polyacetal resin) or the like may be applied. Moreover, aluminum alloys and other metals may be used for the materials.

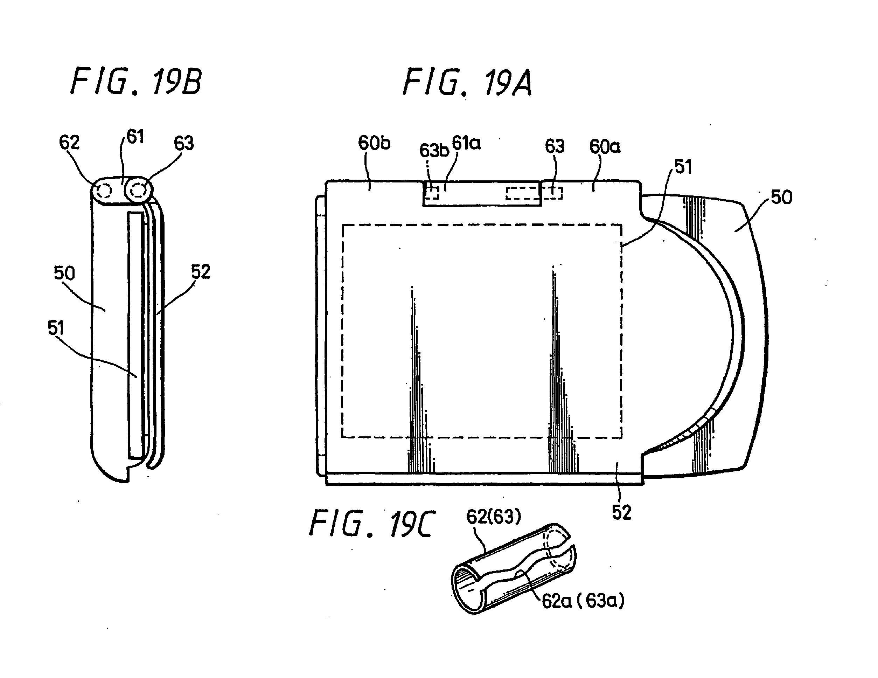

Furthermore, the control device 2 has such a configuration as shown in FIGS. 1 and 19A to 19C, and in other figures. That is, the control device 2, which is a controller, comprises: a cabinet 50; a liquid crystal display 51 which represents one specific example of a display unit; a cover 52 which covers and uncovers the display surface of the liquid crystal display 51; an operation unit 53 comprised of various kinds of switching means, adjusting means, and the like; an electronic circuit which is stored in the cabinet; and other units.

The cabinet 50 comprises a hollow housing in an approximately quadrilateral shape, and an opening window 54 is provided as slightly shifted to one end in the longitudinal direction which is a transverse direction. In addition, a plurality of opening holes (three holes in the present embodiment) 55a, 55b and 55c are provided at suitable distances in the widthwise direction at the other end in the longitudinal direction of the cabinet 50. The liquid crystal display 51 is fitted into the opening window 54, and various kinds of operation buttons in the operation unit 53 are inserted into the plurality of opening holes 55a to 55c, respectively.

In the first opening hole 55a located at the upper part, an operation button 56a is installed as a basic operation switch by which basic operations such as reproduction, fast-forwarding and rewinding are executed. With regard to the operation button 56a, on/off operation of reproduction may be realized by pushing, for example, the center part of the button 56a. And, fast-forwarding or rewinding operation may be selectively executed by pushing either side of the button.

In the second opening hole 55b located at the center, a selection button 56b is installed as a mode selection switch by which mode selection and decision may be executed. With regard to the selection button 56b, various kinds of modes may be selected by pushing, for example, any of the upper, lower, right and left parts of the button 56b, and the selected mode may be decided by pushing the center part of the button 56b after the selection. In addition, in the third opening hole 55c located at the lower part, a power supply button 56c is installed as a power supply switch. On/off of the power supply is executed by sliding the power supply button 56c in the transverse direction.

Furthermore, a long hole 55d extended in the widthwise direction is provided on the side surface of the cabinet 50 which is the side of the opening holes 55a to 55c. In the long hole 55d, two adjusting buttons 56d and 56e are installed as volume switches for adjusting the volume. The adjusting button 56d is to turn up the volume, and the other adjusting button 56e is to turn down the volume.

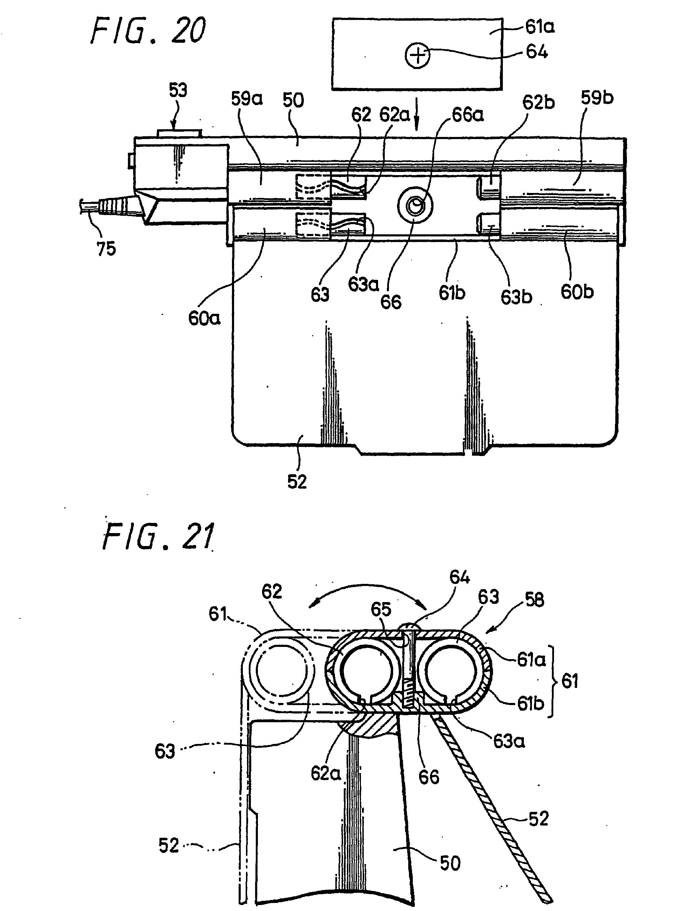

As shown in FIG. 1, FIG. 20 and in other figures, a connection unit 58 of the cover 52 is provided on the upper surface of the cabinet 50. The connection unit 58 comprises: protruding rails 59a and 59b which are provided on the upper surface of the cabinet 50; protruding rails 60a and 60b which are provided on the upper side of the cover 52; a connection block 61 which lies between the protruding rails 59a, 60a and the protruding rails 59b, 60b; two spring pins 62 and 63, which represent one specific example of resisting means; and the like.

Two sets of the protruding rails 59a, 60a and 59b, 60b are configured to have similar shapes and structures, and to be arranged on the same shaft center lines at a predetermined distance, respectively. One end of spring pins 62 and 63 in the axial direction is pressed under pressure into internal end surfaces of the protruding rails 59a, 60a of one set, respectively.

As shown enlarged in FIG. 19C, the spring pins 62 and 63 are metal cylindrical tubes formed with slits 62a and 63a. Each slit of 62a and 63a of the spring pins 62 and 63 is continuously provided from one end to the other end of the cylindrical tubes, and the diameters of those pins may be elastically reduced only by the amounts of each width of the slits 62a and 63a, whereby elasticity is given to the whole structure.

Here, the shapes of the slits 62a and 63a of the spring pins 62 and 63 are not limited to a waveform shown in the drawing according to the present embodiment, and another shape such as a straight-line, a curved-line, saw-toothed, or a horny one may be formed. As materials for the spring pins 62 and 63, metal such as spring steel, stainless steel or the like may be preferable, but engineering plastic may also be applied.

And convex shaft portions 62b, 63b protruding toward the spring pins 62 and 63 are provided in the internal end surface of protruding rails 59b, 60b of the other set, respectively. The diameters of each convex shaft portion 62b, 63b are set to approximately equal to the outer diameters of the spring pins 62 and 63, respectively. The two convex shaft portions 62b, 63b and the protruding portions of the two spring pins 62, 63 are covered with the connection block 61.

As shown in FIG. 21, the connection block 61 is formed by a combination of a first block 61a and a second block 61b which are formed like gutters, and a fixing screw 64 for tightening and fixing both the blocks 61a, 61b. A through hole 65 is provided at approximately the center part of the first block 61a, and a boss 66 is arranged at approximately the center part of the inner surface of the second block 61b. Further, a screw hole 66a into which a screw portion of the fixing screw 64 is fastened is provided at the boss 66.

The second block 61b presses one side of the protruding portions of the two spring pins 62, 63 and the two convex shaft portions 62b, 63b, and then the first block 61a covers the other side of them. Thereafter, the fixing screw 64 is made to penetrate through both the blocks 61a, 61b, and its screw tip is screwed into the screw hole 66a of the boss 66, and to tighten the both blocks.

By constructing as described above, the cabinet 50 and the cover 52 are pivotally connected using the connection block 61 by a connection unit 58 which has hinged structures at two locations. In such a case, the amounts of reduction in the diameters of the spring pins 62 and 63 may be adjusted by adjusting the tightening force of the fixing screw 64. As a result, frictional forces generated between the connection block 61 and the spring pins 62, 63 may be varied by changing the diameters of the spring pins 62 and 63. Accordingly, operational forces required at operation of the cover 52 may be appropriately adjusted by changing the frictional force for opening or closing the cover 52.

Moreover, the cover 52 comprises a plate body with a size which may cover approximately an entire display surface including the liquid crystal display 51 of the cabinet 50. The above-described protruding rails 60a and 60b are provided integrally at the upper edge of the cover 52. The cover 52 and the cabinet 50 are pivotally connected by the connection unit 58 which has the hinged structures at two locations.

Thus, the cover 52 may be pivoted at a maximum angle of approximately 360 degrees with respect to the liquid crystal display 51 which is a display surface. Accordingly, by pivoting and moving the cover 52 at an angle of approximately 360 degrees backward, the cover 52 itself may function as a stand for supporting the cabinet 50.

A first pivoting shaft parallel to the display unit is formed by the above first spring pin 62 and convex shaft portion 62b of the cabinet 50. The cabinet 50 and the connection block 61 are pivotally connected around the first pivoting shaft. Further, a second pivoting shaft is formed by the second spring pin 63 and the convex shaft portion 63b on the side of the cover 52. The second pivoting shaft is parallel to the first pivoting shaft, and the cover 52 and the connection block 61 are pivotally connected around the second pivoting shaft. The cover 52 may be fixed at an arbitrary position with respect to each pivoting shaft with a frictional force generated between the connection block 61 and the spring pin 62 or 63.

The electronic circuit contained in the cabinet 50 executes not only control on the control device 2, but also remote control on the player main unit 6. That is, the electronic circuit makes a remote control unit; send a reproduction instruction control signal for reproducing natural picture information stored in a disc; receive the natural picture information reproduced by the player main unit 6 according to the reproduction instruction control signal; and display the natural picture information on the liquid crystal display 51.

Therefore, though not shown in figures, the electronic circuit comprises: a microcomputer which may execute predetermined control; a storage device (RAM) in which a predetermined program has been previously installed; a storage device (ROM) in which arbitrary information may be recorded; and other electronic members.

Engineering plastic such as ABS, POM or the like may be applied as materials for the cabinet 50, the cover 52, and the connection block 61 of the control device 2 with the above-described configuration. However, the materials are not limited to the above plastic, and aluminum alloys or other metals may be used for the materials.

As shown in FIG. 1, at one corner of the bottom surface as a first side surface, one end of a first connection cable 4 which connects the control device 2 to the player main unit 6 is pivotally supported by a pivot-supporting unit 160. In order to secure the pivoting operation by the pivot-supporting unit 160, an opening 168 which is opened to the bottom surface and to the right side surface as a second side surface perpendicular to the bottom surface, is provided at one corner of the bottom surface of the cabinet 50.

A first plug 70 to connect the player main unit 6 is integrally attached to the other end of the connection cable 4. The first plug 70 comprises: a plug main body 71 having a hollow body with a quadrilateral section, a cap 72 in a semicircular shape which is joined to the rear side of the plug main body 71, a terminal cover 73 which is protruding from the tip of the plug main body 71, and the like.

A tip end of the cap 72 is formed thinner in the width. And, protruding guide rails 74, which regulate the inserting direction when the cap 72 is inserted into the first socket 28 of the player main unit 6, are provided at two positions on one surface of the thinner part of the cap 72. Corresponding to the protruding guide rails 74, a pair of guide grooves 28a which are slidably fitted to the rails are provided in the first socket 28.

In addition, in order to prevent insertion error, a convex portion 74a which protrudes forward like a circular arc is provided at the tip end of a thicker end on one surface of the plug main body 71. Also, for that purpose, a concave portion corresponding to the convex unit, which opens at the tip end of a thicker end of the plug main body 71 like a circular arc is provided.

As described above, since the convex and concave portions which prevent insertion error are provided at the tip end of the plug inserting end of the plug main body 71, a number of terminals disposed in the terminal cover 73 may be prevented from being damaged by insertion error of the first plug 70. Moreover, since a pair of protruding guide rails 74 are provided in the plug main body 71, terminals in the terminal cover 73 may be prevented from being damaged by tensile external-forces in the direction of twisting to extract the first plug 70.

In the terminal cover 73 of the first plug 70, which is comprised of a slender frame with a quadrilateral section, a number of terminals are arranged in a row (or in a plurality of rows) along the longitudinal direction. And, one end of a coating member 75 which is extending sideways is connected to the rear part of the cap 72. A number of wire rods are inserted through the coating member 75, and the control device 2 and the player main unit 6 are electrically connected by the above wire rods.

By setting the pulling-out direction of the wire rods sideways as described above, the leading direction of the connection cable 4 may be regulated such that the above leading direction is approximately the same direction as the longitudinal direction of the battery housing 3. Accordingly, loads applied to the connection portion of the first plug 70 of the connection cable 4 may be reduced, whereby troubles such as a short circuit and an open circuit may also be reduced. Here, the plug main body 71 of the first plug 70 is inserted up to the root of the protruding guide rails 74.

Further, a second plug 77 provided at one end of the second connection cable 5 to connect the player main unit 6 to other electronic devices is installed in a detachable manner in the second socket 29. The second plug 77 has a terminal cover 78 which is protruding from the tip on the plug inserting side. The terminal cover 78 comprises a slender frame with a quadrilateral section. A number of terminals are arranged in a row (or in a plurality of rows) along the longitudinal direction in the above cover 78.

One end of the wire rods 79 is connected to the rear surface of the second plug 77, and the other end of the wire rods 79 is connected to a connector 80. The connector 80 connects the player main unit 6 to other electronic devices (for example, a television set). The second connection cable 5 is formed of the second plug 77, the wire rods 79, and the connector 80.

The connector 80 comprises a hollow housing in a flat shape, and the wire rods 79 are connected to one end surface. A plurality of terminals 81 are arranged in a row on the other end surface of the connector 80. As the above terminals 81, for example, a video terminal, an S1 video terminal, right and left audio terminals or the like may be listed.

An electronic device with the above-described configuration may be used in the following way, for example. The battery housing 3 is integrally joined to the player main unit 6 in advance. That is, the player main unit 6 is inserted from its protruding portion 6a into between the upper battery case 34 and the lower battery case 35 of the battery housing 3. Then, the engagement concavo-convex portion 36 of the upper battery case 34 is made to engage the hook 37 of the opening and closing cover 8.

As shown in FIG. 4, at this time the plug 43 provided in the player main unit 6 is engaged with the socket 42 provided in the lower battery case 35 by inserting the player main unit 6 up to a predetermined position. As a result, the player main unit 6 and the battery housing 3 are electrically connected to each other. Subsequently, the fixing screw 38 of the lower battery case 35 is screwed into a screw hole of the player main unit 6 to fasten the above case 35 and the main unit 6. Fitting the battery housing 3 to the player main unit 6 is thus completed.

Then, the first plug 70 of the first connection cable 4 is inserted into the first socket 28 of the player main unit 6, and the control device 2 is connected to the player main unit 6 through the first connection cable 4. With this, the player main unit 6, the battery housing 3 and the control device 2 are electrically connected to each other to enable the operation of the DVD player 1.

Thus, the control device 2 and the player main unit 6 are connected through the first connection cable 4, whereby a reproduction instruction control signal may be sent from the control device 2, which is a controller, to the player main unit 6 through the wire rods. Further, when the player main unit 6 reproduces the natural picture information recorded in a disc according to the reproduction instruction control signal sent from the control device 2, the reproduction signal is sent to the control device 2 through the first connection cable 4.

The control device 2 which has received the reproduction signal displays the received reproduction signal on the liquid crystal display 51 as natural picture information. A user may enjoy the natural picture information which has been previously recorded in a disc by watching the information reproduced on the liquid crystal display. Audio information may also be enjoyed simultaneously through an earphone by connecting the earphone to the player main unit 6.

Operation to install a disc in the player main unit 6 of the DVD player 1 may be performed in the following manner, for example. In the first place, the buckle 9 is pulled up, and the locked state of the opening and closing cover 8 with the buckle 9 is released. That is, the buckle 9 may be caught with a finger to be pulled up against the spring force of the spring member 152. With this, the buckle 9 is directly pulled up without the sliding operation of the sliding member 151 and is unlocked in a simple manner.

In this case, since the spring force of the spring member 152 becomes resistant to the pulling-up operation of the buckle 9, applying a comparatively large force to the buckle 9 is required.

As a different manner, sliding operation of the sliding member 151 to unlock with a small force the locked state of the buckle 9 is provided, wherein the engagement body 9b is made to move backward by the operation to release the engagement with the engagement receiving unit 26. With this, the locked state of the buckle 9 is released and the buckle 9 is pulled up easily with a small force by pivoting the buckle 9 around the hinge unit 21.

Thus, when the buckle 9 is pulled up, the opening and closing protrusion 156 provided on the inner surface of the buckle 9 is extracted from the buckle detection hole 27 which is provided on the front surface of the player main unit 6. Then, the second detector detecting the locked state of the buckle 9 becomes off, and the second detection signal is sent to the control device 2.

Then, the engagement receiving unit 26 exposed by pulling up the buckle 9, or the like is held by a fingertip to lift the front side of the opening and closing cover 8 to an arbitrary height. Accordingly, the disc installation unit 7 provided on the upper surface of the player main unit 6 is released, and the disc drive device 10 is exposed.

At this time, the opening and closing detection piece 19 of the opening and closing cover 8 is extracted from the detection hole 20 for the cover of the player main unit 6. Then, the first detector which detects opening and closing state of the opening and closing cover 8 becomes off, and the first detection signal is sent to the control device 2. When neither a signal of the opening and closing cover 8 indicating its open state nor the second detected signal detecting the released state of the above buckle 9 are supplied to the control device 2, that is, when the opening and closing cover 8 is open or when the buckle 9 is open, the disc drive device 10 is not driven.

Here, the upper battery case 34 of the battery housing 3 is moved integrally with the opening and closing cover 8 and is lifted upward therewith. Thus, as shown in FIG. 10, the disc installation unit 7 is opened, and the turntable 11 of the disc drive device 10 is exposed. Thereafter, a desired disc is installed on the turntable 11 to execute chucking of the optical disc.

Then, the opening and closing cover 8 is pushed down together with the upper battery case 34, and the disc installation unit 7 is closed with the opening and closing cover 8. At this time, by completely closing the opening and closing cover 8, the opening and closing detection piece 19 is inserted into the detection hole 20 for detecting the state of the cover. As a result, the first detector which detects the closed state of the opening and closing cover 8 becomes on, and the first detection signal is supplied to the control device 2. The driving of the disc drive device 10 will not be started only by the first detection signal.

Then, the buckle 9 is pushed up to engage the engagement body 9b with the engagement receiving unit 26. With this, the opening and closing cover 8 is firmly locked to the player main unit 6 with the buckle 9. At this time, by completely closing the buckle 9, the opening and closing protrusion 156 is inserted into the buckle detection hole 27. As a result, the second detector which detects the locked state of the buckle 9 becomes on, and the second detection signal is supplied to the control device 2. The second detection signal and the first detection signal are both supplied to the control device 2 to enable starting drive of the disc drive device 10.

Although the DVD player 1 thus prepared is available for indoor use, it is preferably used outdoors. In such a case, it is preferable to construct the DVD player 1 such that the DVD player 1 is suspended from a neck etc. with a strap not shown in the figures to be portable.

In such a case, the user may enjoy natural picture information recorded on discs with holding the control device 2 by hands for the operation, using the liquid crystal display 51 of the control device 2. Further, the user may enjoy audio information recorded on discs with earphones connected to the earphone jack 30.

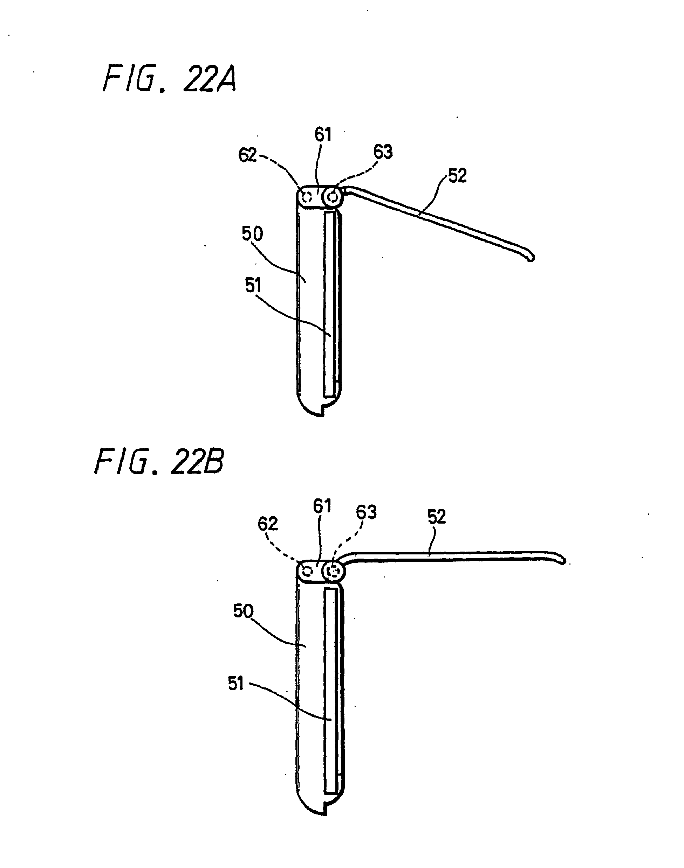

Hereinafter, embodiments of the operation on the control device 2 will be described. FIG. 22A shows a state in which a user holds the control device 2 by hand, and the cover 52 is opened at an angle of slightly smaller than 90 degrees to the liquid crystal display 51 of the display surface of the cabinet 50.

In this case, a frictional force generated between the spring pin 63 of the second pivoting shaft and the connection block 61 is set to be smaller than a frictional force generated between the spring pin 62 of the first pivoting shaft and the connection block 61 (for example, the thickness of the spring pin 62 is set to be larger than that of the spring pin 63, and the elasticity of the spring pin 62 is set to be larger than that of the spring pin 63.).

At first, the first pivoting shaft is in a state of being fixed, and the cover 52 is rotated around the second pivoting shaft. When the amount of pivoting with respect to the second pivoting shaft becomes maximum, the cover 52 starts pivoting around the first pivoting shaft.

In the first place, the cover 52 is pulled up by a fingertip which caught the free end thereof. Since the frictional force caused by the spring pin 62 of the first pivoting shaft is larger than that of the spring pin 63 of the second pivoting shaft, the cover 52 is pivoted around the spring pin 63 of the second pivoting shaft and the second convex shaft portion 63b.

Then, as shown in FIG. 22A, when the cover 52 is stopped at an arbitrary angle of smaller than 90 degrees, the cover 52 is fixed by the frictional force of the spring pin 63 at an angle at which the cover 52 has been stopped. In such a state, though a user may watch contents displayed on the liquid crystal display 51, it is difficult for others to look in the contents, thereby preventing the contents from being peeped by surrounding others.

FIG. 22B shows a state in which a user holds the control device 2 by hand, and the cover 52 is opened at an angle of 90 degrees to the liquid crystal display 51 of the cabinet 50. Since the cover 52 is stopped at an angle of about 90 degrees, the cover 52 may be used as a sunshade.

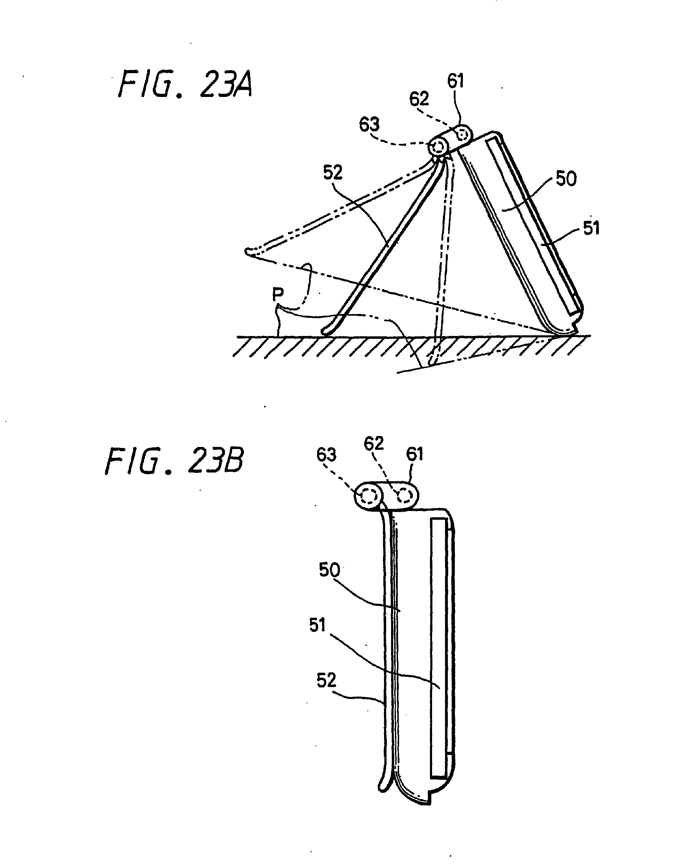

Further, FIG. 23A shows a state in which the cover 52 is pivoted at an arbitrary angle of equal to or larger than 270 degrees to the display surface of the cabinet 50, and the cabinet 50 and the cover 52 are mounted on a plane P (mounting surface) such as a desk or the like at their free ends, respectively. The above state shows the result after the connection block 61 is pivoted from the state shown in FIG. 22B by 180 degrees around the spring pin 62 of the first pivoting shaft and the first convex shaft portion 62b.

Subsequently, the cover 52 is pivoted at an arbitrary angle of smaller than 90 degrees around the spring pin 63 of the second pivoting shaft and the second convex shaft portion 63b. With this, as shown in FIG. 23A, the cover 52 may be used as a stand for supporting the cabinet 50. In this case, a user may freely change the angle of inclination of the cover 52 to the cabinet 50, whereby the display surface of the liquid crystal display 51 is set for the user to watch the display surface without difficulties.

FIG. 23B shows a state in which the cover 52 is pivoted by 360 degrees with respect to the display surface of the cabinet 50, and is right on the rear surface of the cabinet 50. In this case, the cover 52 will not become an obstacle when a user watches the display surface while holding the control device 2 by hands.

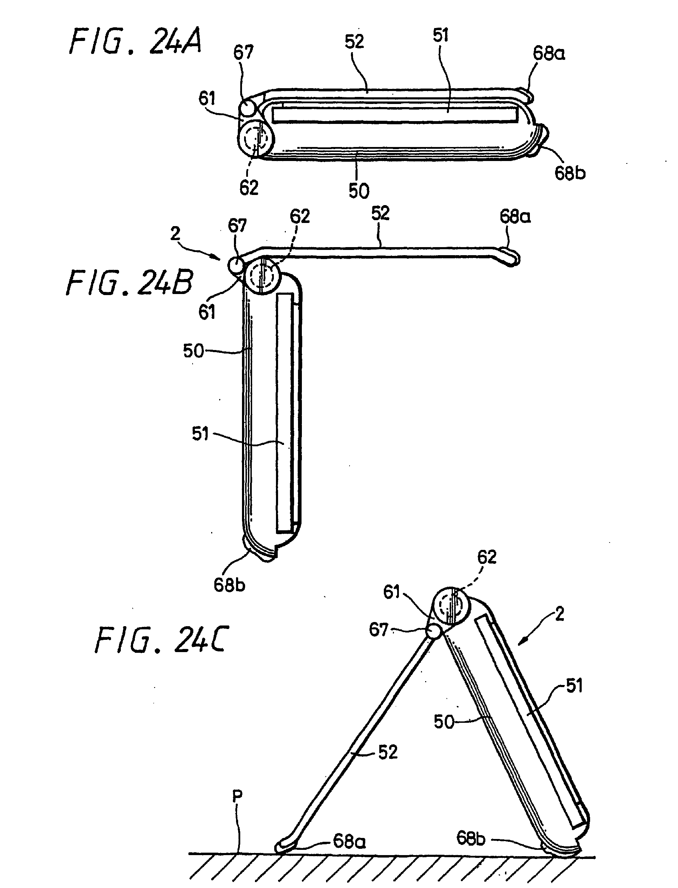

FIG. 24A shows another embodiment in which, of those two spring pins 62 and 63 used in the above described control device 2, the spring pin 63 of the second pivoting shaft is replaced with a rotating shaft 67, and the cover 52 and the connection block 61 are pivotally connected by the rotating shaft 67. In this case, the protruding rails of the cabinet 50 and the connection block 61 are pivotally connected with a frictional force caused by the elasticity of the spring pin 62 in a similar manner to that of the above embodiment. Here, anti-slipping rubbers 68a and 68b are stuck as an anti-slipping member on free ends of the cover 52 and the cabinet 50, respectively.

FIG. 24B is an explanatory view of the operation of the control device 2 shown in FIG. 24A. FIG. 24B shows a state in which a user holds the control device 2 by hands, and the cover 52 is opened at an angle of 90 degrees to the display surface of the cabinet 50. With this state, the display surface may be watched by a user without difficulties using the cover 52 as a sunshade.

As shown in FIG. 24B, when the rotating shaft 67 is moved to the diagonally rear position of the spring pin 62, the rotating shaft 67 pivotally connects the cover 52 and the connection block 61 without any frictional force. However, the cover 52 may be held at a position at which the body 52 is pivoted at an angle of approximately 90 degrees to the display surface of the cabinet 50 only by the frictional force based on the elasticity between the spring pin 62 and the connection block 61.

FIG. 24C shows a state in which the cover 52 is pivoted at an arbitrary angle of equal to or larger than 270 degrees to the display surface of the cabinet 50, and the cabinet 50 and the cover 52 are mounted on a plane P (mounting surface) such as a desk or the like at the free ends, respectively. In this state, the cabinet 50 may be kept standing on a horizontal plane by using the cover 52 as a supporting stand. Thus, a user may freely change the angle of inclination of the cover 52 to the cabinet 50, whereby the display surface of the liquid crystal display 51 is set for the user to watch the display surface without difficulties.

Moreover, since the anti-slipping rubbers 68a and 68b are fitted to the free ends of the cabinet 50 and the cover 52, there is no possibility that the control device 2 slides on a plane P such as a desk or the like. Accordingly, the inclination angle of the cabinet 50 may be kept at an arbitrary angle by using the cover 52 as a supporting stand, even when the rotating shaft 67 is used as one pivoting shaft.

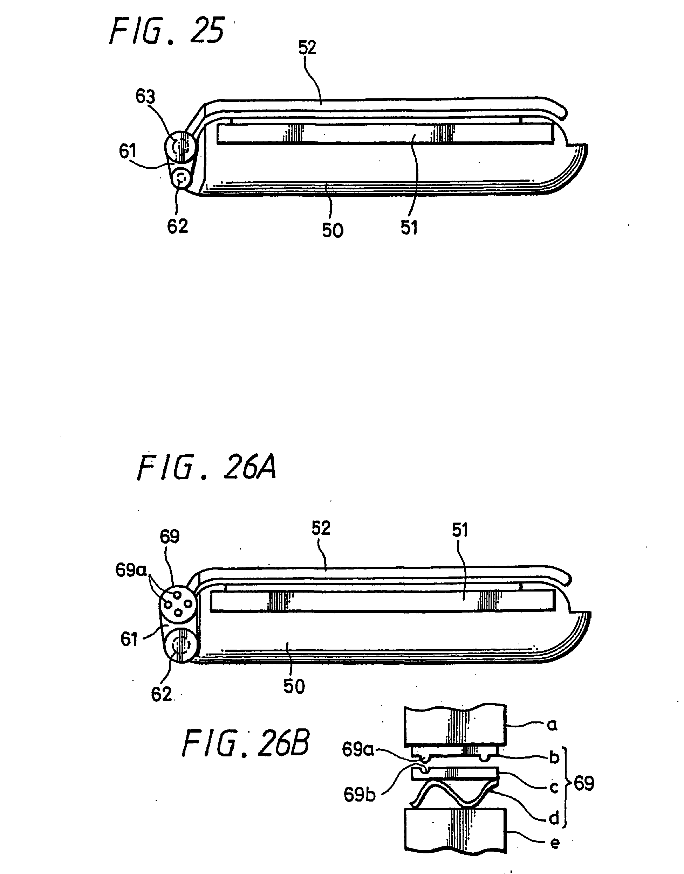

FIG. 25 shows a further embodiment in which the diameters of two spring pins 62 and 63 are made to be different to have different magnitude of elasticity. For example, with regard to a pair of spring pins 62 and 63, the diameter of the first spring pin 62 is made to be smaller, and that of the second spring pin 63 is made to be larger, and the frictional force of the second spring pin 63 is set to be larger than that of the first spring pin 62. In this embodiment, similarly to the embodiment shown in the above FIG 22A, 22B and the like, the spring pin 62 with a smaller elasticity is configured to be preferentially pivoted, and pivoting of the spring pin 63 with a larger elasticity will be started after the pivoting amount of the spring pin 62 becomes the maximum.

In this embodiment, whenever the cover 52 is opened or closed to the display surface of the cabinet 50, first the cover 52 is pivoted around the first pivoting shaft having the spring pin 62 with a smaller elasticity, and secondly the cover 52 is pivoted around the second pivoting shaft having the spring pin 63 with a larger elasticity.

Specifically, with opening and closing operation of the cover 52, first the connection block 61 is pivoted with respect to the cabinet 50 around the spring pin 62. Secondly, the cover 52 is pivoted with respect to the connection block 61 around the spring pin 63. In this embodiment, with regard to the first and second pivoting shafts which are arranged parallel to each other, a pivoting shaft with the spring pin 62 having a smaller elasticity is preferentially pivoted, whereby pivoting of the cover 52 to the cabinet 50 may be smoothly executed.

FIG. 26A shows further example in which a clicking plate 69 is provided as resisting means instead of one of the above two spring pins, for example, the spring pin 63. In the control device 2 shown in this embodiment, the angle of the cover 52 to the display surface of the cabinet 50 may be selected from a plurality of stages at a predetermined angle (four stages by 90 degrees in the present embodiment). Here, both of the frictional force of the clicking plate 69 and that of the spring pin 63 may be set to have the same magnitude or to have different magnitudes for each frictional force.

FIG. 26B shows an exploded and enlarged view of the clicking circular plate 69 shown in FIG. 26A. A clicking convex circular plate b is fixed to the base of the cover 52 with fixing means such as adhesives. On the clicking convex circular plate b, four convex portions 69a with the same radius are disposed at equal intervals in the circumferential direction. A clicking concave circular plate c is set to oppose to the clicking convex circular plate b.

One concave portion 69b is provided on one surface of the clicking concave circular plate c such that the portion 69b is disposed with the same radius as the four convex portions 69a to engage with or separate from each convex portion 69a. On the other surface of the clicking concave circular plate c, one surface of a corrugated plate spring d with a ring shape is fixed by fixing means such as welding. The other surface of the corrugated plate spring d is fixed on the base e of the connection block 61 with fixing means such as adhesives.

Thus, the clicking circular plate 69 has a multilayer structure comprising the clicking convex circular plate b, the clicking concave circular plate c and the corrugated plate spring d. The clicking circular plate 69 is located between the base a of the cover 52 and the base e of the connection block 61.

Accordingly, when the cover 52 is pivoted, any one of four convex portions 69a on the clicking convex circular plate b protrudes from the concave portion 69b of the clicking concave circular plate c, whereby a frictional force is generated by the elasticity of the corrugated plate spring d until the other adjacent convex portion 69a engages with the portion 69b. The cover 52 is held at an arbitrary angle to the display surface of the cabinet 50 by the above frictional force.

Further, the cover 52 is locked at a predetermined angle with respect to the display surface of the cabinet 50 by engaging the convex portion 69a on the clicking convex circular plate b with the concave portion 69b on the clicking concave circular plate c. Thereafter, when the cover 52 is pivoted, click feeling is obtained by extracting the convex portion 69a from the concave portion 69b as the cover 52 is pivoted. Thus, change in the angle of the cover 52 is reliably detected by the touch, according to the click feeling at insertion of the convex portion 69a with respect to the concave portion 69b.

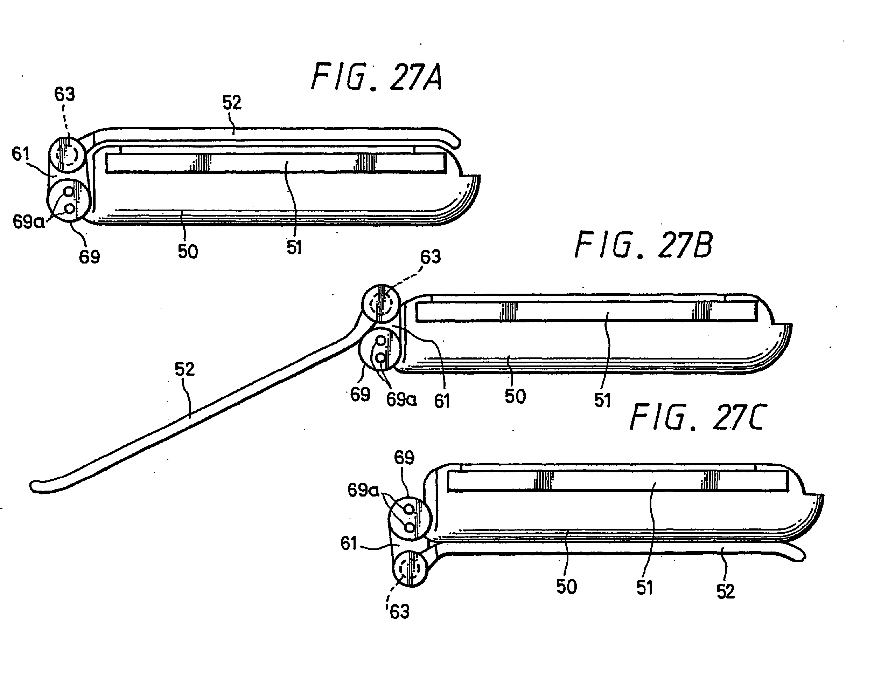

FIG. 27A shows further embodiment in which the clicking positions are set at two positions on the above-described clicking plate 69, and also the clicking plate 69 is provided on the first pivoting shaft and the spring pin 63 is provided on the second pivoting shaft. On the clicking plate 69, two convex portions 69a are arranged in the circumferential direction with the same radius at equal intervals. Note that the structure of the clicking concave circular plate c and that of the corrugated plate spring d are similar to those of the above described embodiments.

In this case, both the frictional force of the clicking plate 69 and that of the spring pin 63 may be set to have the same magnitude or to have different magnitudes. In this embodiment, the frictional force of the clicking plate 69 is set to be larger than that of the spring pin 63.

As shown in FIG. 27B, when the cover 52 is opened, first the second pivoting shaft with a smaller frictional force is pivoted, and secondly the first pivoting shaft with a larger frictional force is pivoted. When a pulling-up force is applied to the free end of the cover 52, the cover 52 is opened at an angle of slightly over 180 degrees with respect to the display surface of the cabinet 50 with the spring pin 63 of the second pivoting shaft being a pivoting center. At this time, a frictional force is generated between the spring pin 63 and the connection block 61, and the cover 52 is pivoted with a frictional force caused by the elasticity of the spring pin 63.

Subsequently, as shown in FIG. 27C, when the cover 52 is further opened, the clicking plate 69 and the connection block 61 are pivoted through 180 degrees with the clicking plate 69 of the first pivoting shaft being a pivoting center. Accordingly, the cover 52 is opened through 360 degrees with respect to the display surface of the cabinet 50, and the cover 52 reaches the rear of the cabinet 50.

At this time, click feeling is obtained by operating the clicking plate at the beginning of pivoting and at the termination of pivoting, and also during pivoting, the cover 52 is pivoted with a frictional force by a spring force of the corrugated plate spring d. As described above, the cover 52 is pivoted with the click feeling and the frictional force.

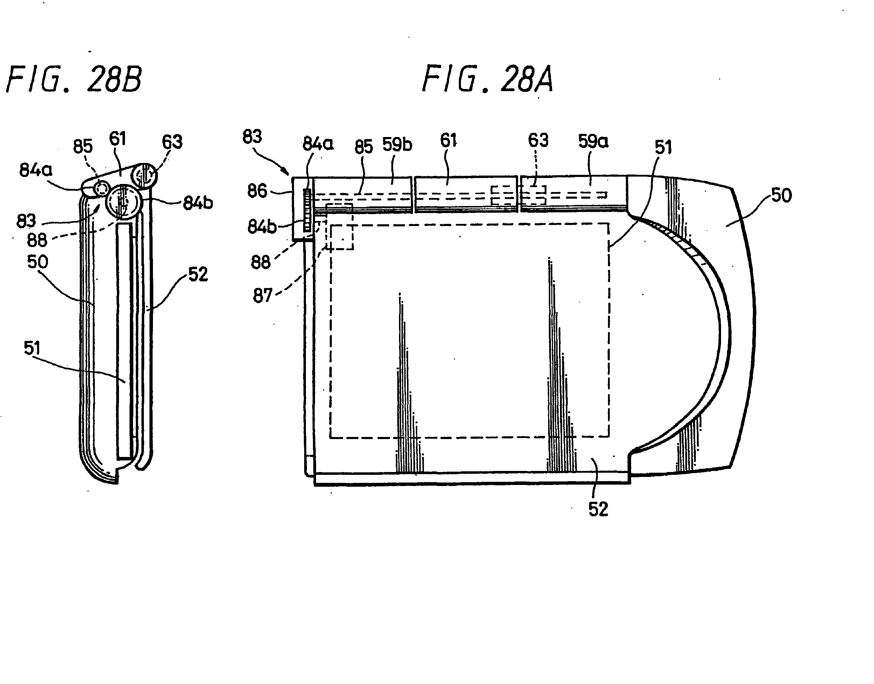

FIG. 28 shows another embodiment of resisting means in which loads is given to the cover 52 when the body 52 is pivoted. The resisting means described in this embodiment comprises a gear device 83 and a damper device 87. The control device 2 shown in this embodiment is provided with the gear device 83 comprising two gears 84a and 84b, and the damper device 87 as resisting means, instead of one of the above-described two spring pins, for example, the spring pin 62.

A rotating shaft 85 is provided as a first pivoting shaft in the control device 2, and the connection block 61 is fixed in the middle of the rotating shaft 85 in the axial direction. One end of the rotating shaft 85 is protruding sideways, passing through the cabinet 50, and a smaller-diameter gear 84a is fixed to the protruding unit. A larger-diameter gear 84b is engaged with the smaller-diameter gear 84a, and a shaft 88 protruding to one side is provided in the larger-diameter gear 84b.

The shaft 88 of the larger-diameter gear 84b is pivotally passed through the side surface of the cabinet 50. And, the tip of the shaft 88 is inserted into the damper device 87 contained in the cabinet 50. A resisting force such as an adhesive force, a frictional force or the like is given by the damper device 87 when the shaft 88 is pivoted, and as the device 87, for example, a liquid damper utilizing liquid or other types of damper devices may be used. 86 is a gearbox which covers the larger and smaller gears 84a and 84b.

In this embodiment, when the cover 52 is pulled up and the connection block 61 is pivoted, the rotation shaft 85 and the smaller-diameter gear 84a are rotated integrally with the connection block 61. Since the larger-diameter gear 84b is constantly engaged with the smaller-diameter gear 84a, the shaft 88 is pivoted by an amount corresponding to the reduction ratio between the gears 84a and 84b. A resisting force is generated in the damper device 87 according to the pivoting amount of the shaft 88, and the connection block 61 is pivoted with respect to the cabinet 50 according to the above resisting force. Accordingly, the cover 52 may be pivoted in a smooth way with an adequate resisting force, and also the cover 52 may be reliably fixed at an arbitrary position in the middle of the pivoting.

The control device 2 with the above configuration is not limited to the use for the DVD player 1 in the above embodiments, but it is also preferably used for PDA (Personal Digital Assistants), a small-type word processor, a small-type microcomputer, an electronic dictionary, a portable television set, a small electronic clock, and the like, for example. Further, the control device 2 with the above configuration may be also applied to desktop-type devices of the above-listed electronic equipment, and other electronic devices.

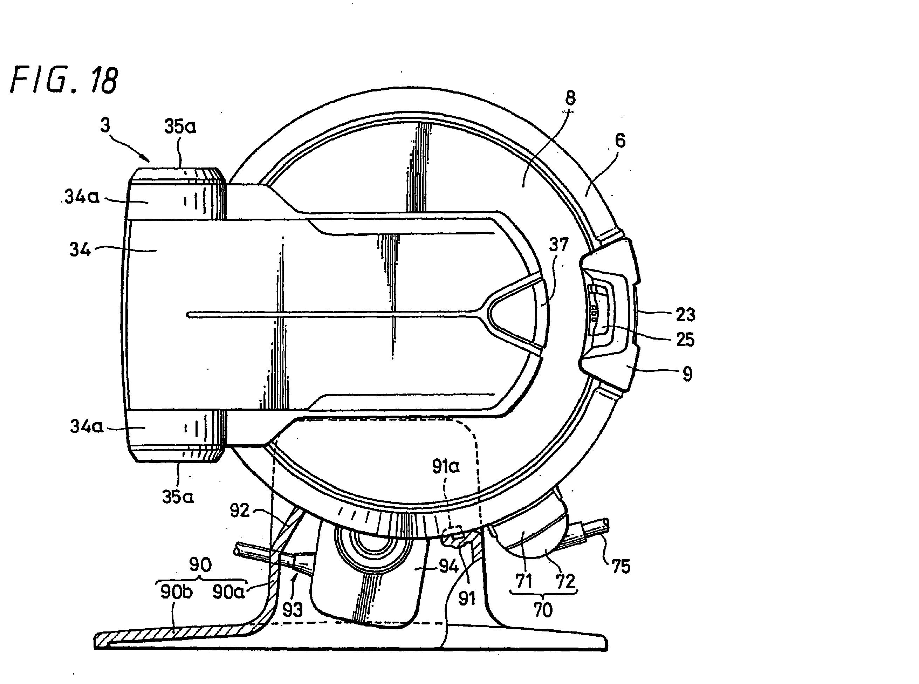

Further, FIG. 18 shows a state in which the DVD player 1 is connected to a domestic power supply or the like which is not shown in the figure to charge the battery housing 3 of a power-supply device. In FIG. 18, a numeral 90 represents a holding stand to keep and hold the player main unit 6. The holding stand 90 comprises a holding portion 90a in which holding grooves are formed on the upper surface and a holding platform 90b which is continuing to the lower part of the holding portion 90a. The holding platform 90b of the holding stand 90 is extended and widely formed such that a sufficiently large mounting surface is secured.

Furthermore, supporting pieces 91 and 92 which support the side surface of the player main unit 6 are provided at both sides of the holding portion 90a in the direction of the holding grooves. A pawl portion 91a which is engaged with a concave part provided on the side surface of the player main unit 6 is provided on the tip of the supporting piece 91. By providing the pawl portion 91a, it becomes possible to securely hold the DVD player 1, in which weight distribution has been ill-balanced in the circumferential direction according to the installed battery housing 3, without rolling even in a state in which the battery housing 3 is turned sideways.

Here, a numeral 93 shown in FIG. 18 represents a third connection cable connecting a power supply such as a domestic socket to the player main unit 6. A charging plug 94 is fitted to one end of the connection cable 93. The charging plug 94 made to be detachable with respect to the second socket unit 29 of the player main unit 6. By pressing a semicircle part at the center of the charging plug 94, a terminal portion is moved backward to release connection to the second socket unit 29.

The description has been made as described above, however, the present invention is not limited to the above embodiments. In those embodiments, a DVD player 1 is used as the reproduction system and the remote control device 2 with a liquid crystal display is provided as an electronic device thereof. However, needless to say, devices such as a portable CD player, a portable disc drive device or other devices may also be applied as the reproduction system.

Moreover, in the above-described embodiments, the present invention has been applied to a disc-reproducing device which performs only reproduction on information signals. However, needless to say, the present invention may be applied to a disc recording and/or reproducing device which may record new information signals as well as reproduce information signals, and also applied to a disc recording device only for recording information signals.

Moreover, in the above embodiments, examples in which the player main unit 6 and the control device 2 are connected to each other by wire has been described, but needless to say, wireless means may be configured to be applied as signal transmission means, wherein the player main unit 6 and the control device 2 are connected to each other by radio for sending/receiving signals. Further, not only a disc-type recording medium, but also a tape-type recording medium, a drum-type recording medium, a semiconductor storage medium, and the like may be used as a storage medium.

Thus, various modifications may be applied without departing from the true spirit and scope of the invention.

### Industrial Applicability

According to the reproduction system of the present application, the reproduction system of a DVD player or the like may be operated to use in a similar manner to those of general headphone stereo devices, and natural picture information which has been conventionally enjoyed only indoors may be easily enjoyed outdoors by a user.

Further, according to the electronic device of the present application, opening and closing operations of the opening and closing cover may be simply executed without installing or detaching the battery housing, and the whole size and weight of the device may be become smaller and lighter, respectively while a number of batteries are stored.

According to the disc recording and/or reproducing device of the present application, opening and closing operations of the disc installation unit into which discs are installed may be easily executed, and the user is not bothered by installing or detaching the battery housing whenever the opening and closing cover is opened and closed. At the same time, the whole size and weight of the device may be become smaller and lighter, while more batteries are stored.

Furthermore, according to the disc recording and/or reproducing device of the present application, there is no possibility of the opening and closing cover being opened when recording and/or reproducing information signals is performed, thereby providing a device with higher safety in which laser beams are not applied to users.

## Claims

1. A reproduction system comprising:
a reproducing device which reproduces natural picture information stored in a storage medium; and
a controller having a remote control unit which sends at least a reproduction instruction control signal to said reproducing device, and a display unit which receives natural picture information reproduced by said reproducing device according to the reproduction instruction control signal and displays the natural picture information.

2. A reproduction system according to claim 1, wherein
said storage medium comprises a data area in which said natural picture information is stored and a management area in which management data for managing data in the data area are stored;
said reproducing device reproduces said natural picture information from the data area of said storage medium; and
the display unit of said controller displays said natural picture information reproduced from said data area by said reproducing device.

3. A reproduction system according to claim 1, wherein said reproducing device comprises
a rotation driving unit which drives a disc to rotate as said storage medium, and a pickup device which moves in a radial direction along an information storage surface of the disc driven to rotate by the rotation driving unit to and reads information from the information storage surface to reproduce the information.

4. A reproduction system according to claim 3, wherein said reproducing device comprises
a rotation driving unit which drives a digital versatile disc to rotate as said storage medium, and a pickup device which moves in a radial direction along an information storage surface of the digital versatile disc driven to rotate by the rotation driving unit and reads information from the information storage surface to reproduce the information.

5. A reproduction system according to claim 1, wherein
a power supply device which supplies electric power to drive the reproducing device is installed on said reproducing device in a detachable manner.

6. A reproduction system according to claim 5, wherein
said reproducing device further comprises an opening and closing cover which opens and closes a storage-medium installation unit containing said storage medium, and
said power supply device comprises a battery housing to contain a plurality of batteries and is installed in said opening and closing cover to be opened and closed integrally with said opening and closing cover.

7. A reproduction system according to claim 6, wherein
said battery housing is provided with either a socket or a plug which is connected to said contained batteries;
said reproducing device to which said opening and closing cover is fitted is provided with the other one of the socket and the plug which is connected to driving means to drive the reproducing device; and
said socket and said plug are connected by fitting said battery housing to said opening and closing cover, whereby electric power is supplied from said batteries to said driving means.

8. A reproduction system according to claim 7, wherein
said battery housing further comprises an output circuit which is connected to said contained batteries, detects abnormalities in the current and the voltage of the electric power supplied from the batteries, and supplies predetermined electric power to either said socket or said plug of said battery housing.

9. A reproduction system according to claim 6, further comprising:
a first friction mechanism for controlling friction such that said opening and closing cover is opened and closed by predetermined magnitude of force; and
a second friction mechanism for controlling friction such that a pair of housing units with a hinge mechanism being held comprises said battery housing, and the pair of housing units are opened and closed by predetermined magnitude of force.

10. A reproduction system according to claim 9, wherein said first friction mechanism comprises: a sliding body which is provided in said opening and closing cover; and a leaf spring which is provided in said reproducing device and generates predetermined friction by a frictional force caused by being pressed into contact with said sliding body.

11. A reproduction system according to claim 9, wherein said second friction mechanism comprises: a friction plate which is located between both members of said pair of housing units; and a spring member which presses one member of said pair of housing units against another member through said friction plate.

12. A reproduction system according to claim 1, wherein said controller is provided with:
an operation unit for issuing instruction of sending at least said reproduction instruction control signal; and
a cover which opens and closes said display unit and forms a stand for the controller when it is opened.

13. A reproduction system according to claim 1, further comprising a connection cable, one end of which is connected to said reproducing device, the other end of which is connected to said controller, and by which information reproduced by said reproduction instruction control signal and said reproducing device is transmitted.

14. A reproduction system according to claim 3, comprising:
a disc installation unit provided in said reproducing device, on which a disc is installed as said storage medium;
an opening and closing cover which opens and closes said disc installation unit;
a buckle which locks said opening and closing cover with respect to said reproducing device;
a first opening and closing detection means which detects opening and closing states of said opening and closing cover to output a first detection signal; and
a second opening and closing detection means which detects a state in which said opening and closing cover is locked with said buckle to output a second detection signal, wherein
when said opening and closing cover is closed based on said first detection signal and said second detection signal and said opening and closing cover is locked with said buckle, said rotation driving unit is driven to start rotation and laser beams are irradiated to a disc by said pickup device.

15. A reproduction system according to claim 14, wherein
said first opening and closing detection means comprises an opening and closing detection piece provided in said opening and closing cover and a first detector provided in said reproducing device, and
said first detector is operated by said opening and closing detection piece to output said first detection signal when said disc installation unit is closed with said opening and closing cover.

16. A reproduction system according to claim 14, wherein
said second opening and closing detection means comprises an opening and closing protrusion provided in said buckle and a second detector provided in said reproducing device, and
said second detector is operated by said opening and closing protrusion to output said second detection signal when said opening and closing cover is locked with said buckle.

17. A reproduction system according to claim 14, wherein
one end of said buckle is pivotally provided in said reproducing device, and at the other end thereof an engagement body engaged with said opening and closing cover is provided; and
when the buckle is pivoted in one direction, the other end is engaged with said opening and closing cover to lock said opening and closing cover.

18. A reproduction system according to claim 17, wherein
said engagement body of said buckle, which is forced to protrude by an elastic member, is engaged with said opening and closing cover in a detachable manner;
said buckle further comprises a sliding member which makes said engagement body move forward and backward by sliding operation;
sliding operation of said sliding member is executed against the force of said elastic member to release the engagement of said engagement body with said opening and closing cover, and to make said buckle pivot in the other direction to enable releasing said locking; and
said locking can be released by pivoting said buckle in the other direction against the force of said elastic member without operation of said sliding member.

19. An electronic device comprising:
a battery housing including a pair of housing units freely opened and closed with a hinge mechanism, in which batteries are contained at least in one of the housing units; and
an opening and closing cover which opens and closes a storage-medium installation unit installing a storage medium, wherein
said battery housing is installed on said opening and closing cover and is opened and closed integrally with the opening and closing cover.

20. An electronic device according to claim 19, wherein
said battery housing is provided with either a socket or a plug which is connected to batteries contained in said housing unit;
an electronic device main unit to which said opening and closing cover is fitted is provided with the other of the socket and the plug which is connected to driving means to drive the electronic device;
said socket and said plug are connected by fitting said battery housing to said opening and closing cover, whereby electric power is supplied from said batteries to said driving means.

21. An electronic device according to claim 20, wherein
said battery housing further comprises an output circuit connected to said batteries in at least one of said pair of housings, which detects abnormalities in the currents and the voltage of the electric power supplied from the batteries, and supplies predetermined electric power to either said socket or said plug of said battery housing.

22. An electronic device according to claim 19, further comprising:
a first friction mechanism for controlling friction such that said opening and closing cover is opened and closed by a predetermined magnitude of force; and
a second friction mechanism provided in said hinge mechanism for controlling friction such that said pair of housing units are opened and closed by predetermined magnitude of force.

23. An electronic device according to claim 22, wherein said first friction mechanism comprises: a sliding body provided in said opening and closing cover, and a leaf spring which is provided in said electronic device main unit and generates predetermined friction by a frictional force caused by being pressed into contact with said sliding body.

24. An electronic device according to claim 22, wherein said second friction mechanism comprises: a friction plate located between both members of said pair of housing units; and a spring member which presses a member of one unit of said pair of housing units against another member through said friction plate.

25. A disc recording and/or reproducing device comprising:
a battery housing including a pair of housing units freely opened and closed with a hinge mechanism, in which batteries are contained at least in one of the housing units;
a main unit having a disc installation unit on which a disc is installed;
a pickup device recording and/or reproducing an information signal on said disc installed in said disc installation unit; and
an opening and closing cover provided in said main unit through the hinge mechanism, which opens and closes said disc installation unit, wherein
said battery housing is installed in said opening and closing cover to be opened and closed integrally with the opening and closing cover.

26. A disc recording and/or reproducing device according to claim 25, wherein
said battery housing is provided with either a socket or a plug which is connected to batteries contained in said housing unit;
said main unit to which said opening and closing cover is fitted is provided with the other one of the socket and the plug which is connected to driving means to drive said pickup device; and
said socket and said plug are connected by fitting said battery housing to said opening and closing cover, whereby electric power is supplied from said batteries to said driving means.

27. A disc recording and/or reproducing device according to claim 26, wherein
said battery housing further comprises an output circuit connected to said batteries in at least one of said pair of housings, which detects abnormalities in the current and the voltage of the electric power supplied from the batteries, and supplies predetermined electric power to either said socket or said plug of said battery housing.

28. A disc recording and/or reproducing device according to claim 25, further comprising:
a first friction mechanism provided in a hinge mechanism of said main unit for controlling friction such that said opening and closing cover is opened and closed by a predetermined magnitude of force; and
a second friction mechanism provided in a hinge mechanism of said battery housing for controlling friction such that said pair of housing units are opened and closed by predetermined magnitude of force.

29. A disc recording and/or reproducing device according to claim 28, wherein said first friction mechanism comprises: a sliding body provided in said opening and closing cover, and a leaf spring which is provided in said main unit and generates predetermined friction by a frictional force caused by being pressed into contact with said sliding body.

30. A disc recording and/or reproducing device according to claim 28, wherein said second friction mechanism comprises: a friction plate located between both members of said pair of housing units; and a spring member which presses one member of said pair of housing units against another member through said friction plate.

31. A disc recording and/or reproducing device, comprising:
a main unit having an opening and closing cover which covers a disc installation unit on which a disc is installed and can be freely opened and closed;
a turntable provided on said disc installation unit, which mounts the disc and rotates with the disc;
a rotation driving unit which drives said turntable to rotate,
an optical pickup device irradiating laser beams on said disc driven by said rotation driving unit to rotate and reproducing information from the reflected beams;
a buckle which locks said opening and closing cover with respect to said main unit;
a first opening and closing detection means for detecting opening and closing states of said opening and closing cover to output a first detection signal;
a second opening and closing detection means for detecting a state in which said opening and closing cover is locked with said buckle to output a second detection signal; and
control means for performing control such that said turntable is driven to start rotating by said rotation driving unit, and said optical pickup device irradiates laser beams on a disc, when said opening and closing cover is closed and said cover is locked with said buckle, based on said first and second detection signals.

32. A disc recording and/or reproducing device according to claim 31, wherein said control means controls said optical pickup device to stop irradiation of laser beams when locking of said opening and closing cover with said buckle is released.

33. A disc recording and/or reproducing device according to claim 31, wherein said first opening and closing detection means comprises an opening and closing detection piece provided in said opening and closing cover and a first detector provided in said main unit, and
when said disc installation unit is closed with said opening and closing cover, said first detector is operated by said opening and closing detection piece to output said first detection signal.

34. A disc recording and/or reproducing device according to claim 31, wherein said second opening and closing detection means comprises an opening and closing protrusion provided in said buckle and a second detector provided in said main unit, and
when said opening and closing cover is locked with said buckle, said second detector is operated by said opening and closing protrusion to output said second detection signal.

35. A disc recording and/or reproducing device according to claim 31, wherein one end of said buckle is pivotally provided in said main unit, and at the other end thereof an engagement body engaged with said opening and closing cover is provided; and
when the buckle is pivoted in one direction, the other end is engaged with said opening and closing cover to lock said opening and closing cover.

36. A disc recording and/or reproducing device according to claim 35, wherein
said engagement body of said buckle, which is forced to protrude by an elastic member, is engaged with said opening and closing cover in a detachable manner;
said buckle further comprises a sliding member which makes said engagement body move forward and backward by sliding operation;
sliding operation of said sliding member is executed against the force of said elastic member to release the engagement of said engagement body with said opening and closing cover, and to make said buckle pivot in the other direction to enable releasing said locking; and
said locking can be released by pivoting said buckle in the other direction against force of said elastic member without operation of said sliding member.
